# EUROPÄISCHE PATENTSCHRIFT

(11) **EP 3 526 634 B1**
(45) Veröffentlichungstag und Bekanntmachung des Hinweises auf die Patenterteilung: **19.07.2023**
(21) Anmeldenummer: 17788183.6
(22) Anmeldetag: 16.10.2017
(51) Int. Cl.: G02B 21/00

(54) **OPTIKGRUPPE FÜR DETEKTIONSLICHT FÜR EIN MIKROSKOP, VERFAHREN ZUR MIKROSKOPIE UND MIKROSKOP**
OPTICAL GROUP FOR DETECTION LIGHT FOR A MICROSCOPE, METHOD FOR MICROSCOPY, AND MICROSCOPE
GROUPE OPTIQUE POUR UNE LUMIÈRE DE DÉTECTION POUR UN MICROSCOPE, PROCÉDÉ DE MICROSCOPIE ET MICROSCOPE

(30) Priorität: 17.10.2016 DE 102016119730
(43) Veröffentlichungstag der Anmeldung: 21.08.2019
(73) Patentinhaber: Carl Zeiss Microscopy GmbH, 07745 Jena (DE)
(72) Erfinder: ANHUT, Tiemo, 07745 Jena (DE); WALD, Matthias, 07751 Jena (DE); SCHWEDT, Daniel, 07745 Jena (DE)
(74) Vertreter: Schiffer, Axel Martin
(86) Internationale Anmeldenummer: PCT/EP2017/076334
(87) Internationale Veröffentlichungsnummer: WO 2018/073169

(56) Entgegenhaltungen:
- WO-A1-2006/008304
- WO-A1-2016/078925
- DE-A1-102009 043 745
- DE-A1-102012 203 736
- DE-A1-102014 107 606
- BERNUSSI A A ET AL: "Reconfigurable Optical Filter Based on Digital Mirror Arrays", IEEE PHOTONICS TECHNOLOGY LETTERS, IEEE SERVICE CENTER, PISCATAWAY, NJ, US, vol. 17, no. 8, 1 August 2005 (2005-08-01) , pages 1743-1745, XP011136690, ISSN: 1041-1135, DOI: 10.1109/LPT.2005.850897

## Beschreibung

Die vorliegende Erfindung betrifft in einem ersten Gesichtspunkt eine Optikgruppe für Detektionslicht für ein Mikroskop nach Anspruch 1, insbesondere für ein konfokales Scanning-Mikroskop.

In weiteren Aspekten bezieht sich die Erfindung auf ein Verfahren zur Mikroskopie, insbesondere unter Verwendung der erfindungsgemäßen Optikgruppe, und auf ein Mikroskop, insbesondere ein konfokales Scanning-Mikroskop.

Die Laser-Scanning-Mikroskopie hat sich als unverzichtbares Werkzeug der biomedizinischen Forschung etabliert. Neuere Entwicklungen der mikroskopischen Techniken verlangen allerdings nach immer sensitiveren und probenschonenderen Verfahren. Hier hat die konfokale Mikroskopie mit einem fokussierten einzelnen Laserstrahl einen deutlichen Nachteil gegenüber anderen Verfahren. Aus diesem Grund werden sogenannte Multipunktverfahren, welche zu einer gewissen Parallelisierung der Bildaufnahme führen, immer wichtiger. Neben der Parallelisierung kann ein räumliches Anregungsmuster allerdings auch so genutzt werden, dass damit in verschiedenen Bereichen der Probe unterschiedliche Farbanregungen vorliegen. Vorteilhaft können die Signale, welche von den einzelnen Laserstrahlen in der Probe angeregt werden, mittels räumlicher Überabtastung detektiert werden.

Neben den punktscannenden Verfahren gibt es weitere Methoden, die in letzter Zeit für die hochauflösende abbildende Mikroskopie (Weitfeldmikroskopie) entwickelt wurden. So ist zum Beispiel das Verfahren SOFI (Superresolution Optical Fluctuation Imaging) bekannt geworden. Um dieses Verfahren breit an bestehenden Farbstoffen einsetzen zu können, benötigt man einen sehr schnellen Sensor, der in der Lage ist, Daten mit Bildraten im MHz-Bereich aufzunehmen. Solche Sensoren existieren bereits, weisen aber den Nachteil auf, dass sie nur eine relativ begrenzte Anzahl von Pixeln haben. Vorteilhaft können diese Sensoren in einer Kombination mit einem konfokalen Mikroskop eingesetzt werden. Somit können die Daten, welche aus der konfokalen Bildgebung resultieren, mit den Daten der SOFI-Bildgebung kombiniert werden.

Bekannte konfokale Systeme sind vergleichsweise unflexibel. In der Regel kann nur ein einziges konfokales Volumen gemessen werden. Allerdings gibt es auch Systeme, bei denen Multipunkt- und Linienmuster schaltbar gemessen werden können. Hierfür werden verschiedene Masken in den Beleuchtungsstrahlengang und in die Pinhole-Ebene eingefahren.

Bekannte Spinning-Disc-Systeme nutzen zwar bildgebende Sensoren (in der Regel EMCCDs) zur Messung der Signale vieler konfokaler Volumina. Jedoch weisen diese Systeme nur eine sehr eingeschränkte Flexibilität auf. So kann man den Abstand der Spots nicht ändern. Weiterhin kann man in solch einem System nicht sinnvoll zoomen und ist bezüglich der nutzbaren Objektive sehr eingeschränkt. Überdies ist ein Umschalten in einen spektralen Modus mit mehr als drei spektralen Kanälen kaum möglich, weil diese Systeme auf normalen Kameras basieren, über die das Spotmuster schließlich gescannt wird.

Bekannt ist schließlich auch ein "array-scannendes" System, bei dem ein Punktmuster über eine Probe gescannt wird. Das resultierende Muster der Signalstrahlung wird dabei wieder "descanned". Mit ruhendem Strahl wird dann eine optische Manipulation so vorgenommen, dass das sogenannte "Reassignment" den gewünschten Effekt hinsichtlich Auflösung usw. zeigt. Schließlich wird das so generierte optische Feld wieder über den Sensor gescannt. Damit erhält man im Prinzip auch die Vorteile einer hohen Parallelisierung, beispielsweise hohe Bildrate und geringe Photoschädigung, in Kombination mit den Vorteilen des Photon Reassignment, wie Unabhängigkeit von der Pinhole-Größe, Arbeiten an der Auflösungsgrenze des Laser-Scanning-Mikroskops. Jedoch erkauft man sich diese Vorteile durch eine überaus komplexe Optik mit den üblichen Nachteilen im Hinblick auf Kosten, Transmissionsverlusten, Problemen bei der Umsetzbarkeit in einem Gerät. Schließlich ist man wiederum bezüglich der spektralen Flexibilität stark eingeschränkt.

Weiterhin kann der mechanische Scanner in einem Laser-Scanning-Mikroskop (LSM) dazu genutzt werden, die begrenzte Anzahl der Pixel der genannten Sensoren auszugleichen und das Objekt auch für diese Bildgebung mosaikförmig abzurastern. Das ist insbesondere deshalb wichtig, weil die bislang verfügbaren Sensoren, zum Beispiel sogenannte Single-Photon-Avalanche-Photodiode-Arrays (SPAD-Arrays), momentan noch relativ wenig Pixel aufweisen. Das optische System des konfokalen Mikroskops muss dafür so ausgelegt werden, dass ein gewisses Bildfeld von der Probe auf den Sensor übertragen werden kann.

Eine gattungsgemäße Optikgruppe für Detektionslicht ist in DE 10 2014 107 606 A1 beschrieben und weist folgende Komponenten auf: eine Eingangsebene zum Durchtritt von zu vermessendem Detektionslicht und einen strahlabwärts von der Eingangsebene angeordneten Detektionsstrahlengang zum Führen des Detektionslichts in eine Detektionsebene. Dabei weist der Detektionsstrahlengang mindestens einen ersten Strahlweg auf mit ersten optischen Strahlführungsmitteln, insbesondere ersten Linsen und/oder Spiegeln, zum Leiten des Detektionslichts in die Detektionsebene.

In DE 10 2014 107 606 A1 können durch Schalten des Strahlwegs verschiedene Anregungs- und Detektionsmodi mit nur einem Sensor realisieren werden. Hierbei kann ein funktionsintegriertes Laserscanningmikroskop zwischen einer punktartigen, einer multipunktartigen, einer linienartigen und einer weitfeldartigen Beleuchtung geschaltet werden.

WO 2006/008304 A1 betrifft ein Rastermikroskop, bei dem zu detektieren-des Licht mithilfe eines Prismas spektral aufgetrennt wird und sodann einzelne zu selektierende spektrale Komponenten detektiert werden.

WO 2016/078925 A1 offenbart eine Detektorvorrichtung zu Detektion eines spektralen Teilbereichs für ein Mikroskop.

In DE 10 2012 203 736 A1 ist ein Lichtrastermikroskop beschrieben, bei dem das zu detektierende Licht spektral aufgespalten und anschließend detektiert wird.

Bernussi et al.: "Reconfigurable Optical Filter Based on Digital Mirror Arrays", IEEE PHOTONICS TECHNOLOGY LETTERS, IEEE SERVICE CENTER, PISCATAWAY, NJ, US, Bd. 17, Nr. 8, 1. August 2005 (2005-08-01), Seiten 1743-1745, XP011136690, ISSN: 1041-1135, D01: 10.1109/LPT.2005.850897 offenbart einen einstellbaren Filter für den optoelektronischen/nachrichtentechnischen Bereich. Ein einlaufendes optisches Signal wird dort mithilfe eines Beugungsgitters spektral aufgetrennt. Einzelne spektrale Komponenten werden dann wahlweise mithilfe eines Spiegelarrays entfernt und andere ausgewählte spektrale Komponenten werden zurückgestrahlt. Mit einem optischen Zirkulator werden das einlaufende und das auslaufende optische Signal getrennt.

DE 10 2009 043 745 A1 offenbart einen Spektraldetektor mit variabler Filterung durch räumliche Farbtrennung für den Einsatz bei einem Laser-Scanning-Mikroskop Als eine **Aufgabe** der Erfindung kann erachtet werden, eine Optikgruppe, ein Verfahren zur Mikroskopie und ein Mikroskop anzugeben, mit denen die Funktionalität für Multipunkt-Mikroskopieverfahren gesteigert werden kann.

Diese Aufgabe wird durch die Optikgruppe mit den Merkmalen des Anspruchs 1, durch das Verfahren mit den Merkmalen des Anspruchs 10 und durch das Mikroskop mit den Merkmalen des Anspruchs 18 gelöst.

Die Optikgruppe der Erfindung ist in Anspruch 1 definiert.

Ein erfindungsgemäßes Verfahren zur Mikroskopie ist in Anspruch 10 definiert.

Das erfindungsgemäße Mikroskop ist in Anspruch 18 definiert.

Bevorzugte Ausgestaltungen der erfindungsgemäßen Optikgruppe, vorteilhafte Varianten des erfindungsgemäßen Verfahrens und des erfindungsgemäßen Mikroskops werden im Folgenden, insbesondere mit Bezug auf die abhängigen Ansprüche und die Figuren beschrieben.

Als ein Kerngedanke der Erfindung kann angesehen werden, dass im Detektionsstrahlengang ein erster Strahlweg für das zu vermessende Detektionslicht vorhanden ist, in dem das Detektionslicht einer Mehrzahl von Beleuchtungsspots simultan spektral aufgespalten und manipuliert werden kann. Dadurch wird das Mikroskopieverfahren einer spektral aufgelösten abtastenden Mikroskopie ermöglicht.

Für Varianten der Erfindung ist bedeutsam, dass im Detektionsstrahlengang außerdem ein zweiter Strahlweg für das zu vermessende Detektionslicht ausgewählt werden kann. Mit ein und derselben Detektionsvorrichtung ist also mit Hilfe dieses zweiten Strahlwegs sowohl gerasterte Weitfeldmikroskopie, die im Folgenden noch im Einzelnen erläutert wird, als auch hochparallelisierte Multispot-Konfokalmikroskopie möglich.

Die Erfindung stellt also eine hochfunktionale Detektionsvorrichtung bereit, die für mehrere Mikroskopieverfahren zum Einsatz kommen kann.

Die Eingangsebene wird bevorzugt so positioniert, dass sie sich in einer zur Probenebene optisch konjugierten Ebene befindet. In der Eingangsebene kann bevorzugt eine Eingangslochblende positioniert sein, eine Eingangslochblende ist aber nicht unbedingt notwendig. Die Eingangslochblende kann auch als Pinhole oder insbesondere konfokales Pinhole bezeichnet werden. Mit dem Begriff Detektionsstrahlengang werden sämtliche optischen Komponenten bezeichnet, von denen das zu vermessende Detektionslicht von seinem Eintritt durch die Eingangslochblende bis zum Nachweis in einem ersten, zweiten oder einem weiteren Detektor beeinflusst wird. Mit den Begriffen des ersten und des zweiten Strahlwegs werden zwei verschiedene optische Wege bezeichnet, die das zu vermessende Detektionslicht von seinem Eintritt durch die Eingangslochblende bis zum Nachweis in einem Detektor in der Detektionsebene durchlaufen kann. Dabei können der erste Strahlweg und der zweite oder ein weiterer Strahlweg auf Teilstrecken, insbesondere strahlabwärts von der Eingangslochblende und/oder vor dem Detektor, identisch sein, also zusammenfallen. Ein Beleuchtungsfleck auf der Probe oder dem Detektor wird im Rahmen dieser Beschreibung auch als Spot oder Punkt bezeichnet. Diese Spots oder Punkte können insbesondere beugungsbegrenzt sein.

Unter dem Begriff Licht, insbesondere Beleuchtungslicht oder Detektionslicht, wird elektromagnetische Strahlung verstanden, die in der Mikroskopie typischerweise zum Einsatz kommt oder auftritt. Das Beleuchtungslicht, das insbesondere im infraroten, sichtbaren oder ultravioletten Spektralbereich liegen kann, wird typischerweise durch Laser bereitgestellt. Bevorzugt ist das erfindungsgemäße Mikroskop ein Laser-Scanning-Mikroskop. Die Begriffe Scannen und Rastern werden in dieser Beschreibung synonym verwendet.

Unter einem spektralen räumlichen Aufspalten oder, was gleichbedeutend ist, einer dispersiven Aufspaltung werden im Rahmen dieser Beschreibung insbesondere Situationen verstanden, bei denen unterschiedliche spektrale Komponenten eines Strahlenbündels in unterschiedliche Raumrichtungen geleitet und in diesem Sinn aufgespalten werden. In bestimmten nichtverschwindenden Wellenlängenintervallen und Raumrichtungsintervallen erfolgt dabei eine stetige Abbildung einer Wellenlänge zu einer Raumrichtung. Das bedeutet, dass Wellenlängen, die dicht beieinander liegen, auch in Raumrichtungen geleitet werden, die nahe beieinanderliegen. Weiter voneinander entfernte Wellenlängen, werden dementsprechend in Raumrichtungen geleitet, die weiter voneinander entfernt sind. Es handelt sich demgemäß bei einer dispersiven Aufspaltung in diesem Sinn um eine andere Aufspaltung als diejenige, die mit Anordnungen von mehreren dielektrischen Strahlteilern erreicht werden kann.

Besonders bevorzugt kommen im Rahmen der vorliegenden Erfindung für das dispersive Aufspalten beugende oder brechende Elemente, typischerweise Prismen oder Gitter, zum Einsatz. Grundsätzlich sind in der erfindungsgemäßen Anordnung keine optischen Filter notwendig. Optional können aber sogenannte Emissionsfilter vor den Sensoren oder vor der optischen Einrichtung eingesetzt werden. Beispielsweise können dadurch Anteile des Anregungslichts oder ein Übersprechen der einzelnen Nachweiskanäle weiter reduziert werden. Von Bedeutung ist für die Erfindung, dass die eigentliche Aufspaltung ohne Filter oder, mit anderen Worten, filterfrei erfolgt. Das hat zum einen den Vorteil, dass im Hinblick auf die konkrete Strahlführung im Einzelnen eine größere Flexibilität erreicht wird als bei Anordnungen mit diskreten dichroitischen Strahlteilern oder anderen Filtern. Außerdem erreicht man potentiell eine bessere spektrale Kantensteilheit und stabilere Ausführung als mit sogenannten spektralen Verlaufsfiltern.

Im Unterschied zu DE 10 2014 107 606 A1 erfolgt bei der Erfindung bei einem Wechsel des Beleuchtungsmodus kein Tausch der Pupillen- und Bildebenen.

Bei einer besonders bevorzugten Variante der erfindungsgemäßen Optikgruppe weist der der Detektionsstrahlengang einen zweiten Strahlweg auf mit zweiten optischen Strahlführungsmitteln, insbesondere Linsen und/oder Spiegeln zum Leiten des Detektionslichts in die Detektionsebene. Die zweiten optischen Strahlführungsmittel sind dabei angeordnet und eingerichtet zum Erzeugen einer beugungsbegrenzten Abbildung der Eingangsebene in die Detektionsebene und eine Auswahleinrichtung ist vorhanden zum Auswählen des ersten Strahlwegs oder des zweiten Strahlwegs für das zu vermessende Detektionslicht.

Mit dieser Ausgestaltung stellt die Erfindung also eine Detektionsvorrichtung bereit, die in Abhängigkeit der Messaufgabe und der entsprechenden Beleuchtung in verschiedenen Detektionsmodi betrieben werden kann. Insbesondere können die Messaufgaben der konfokalen Multipunktmikroskopie und der, gegebenenfalls scannenden, Weitfeldmessung miteinander kombiniert werden.

Die Erfindung löst also insbesondere die Aufgabe, eine Detektionsvorrichtung anzugeben, die verschiedene bildgebende Methoden in einem einzigen System zugänglich macht, ohne dass der Detektionsstrahlweg vor dem Pinhole geschaltet werden muss. Im Vergleich zu konfokalen Systemen aus dem Stand der Technik wird also bezüglich der Detektion eine höhere Flexibilität erreicht. DE 10 2014 107 606 A1 zeigt zwar, wie mit nur einem einzigen Sensor in einem Laserscanning-System verschiedene Betriebsmodi realisiert werden können. Ein Nachteil ist dabei, dass Pupillen- und Bildebenen getauscht werden müssen.

In der Detektionsebene ist erfindungsgemäß mindestens ein ortauflösender, segmentierter Detektor zum Vermessen des Detektionslichts vorhanden. Eine erfindungsgemäße Optikgruppe mit mindestens einem in der Detektionsebene positionierten Detektor kann auch als Detektionsvorrichtung bezeichnet werden.

Grundsätzlich kann die erfindungsgemäße Optikgruppe eingesetzt werden ohne Eingangsblende in der Eingangsebene. Für den Fall, dass die Optikgruppe für die konfokale Mikroskopie eingesetzt wird, kann in der Eingangsebene eine Eingangslochblende, insbesondere ein konfokales Pinhole, zum Einlassen von zu vermessendem Detektionslicht angeordnet sein.

Ein wesentlicher Vorteil der Erfindung ist außerdem, dass auch ein Modus möglich ist, der einen vergleichsweise hohen Parallelisierungsgrad erlaubt. Denkbar sind hier Werte im Bereich einer etwa 100-fachen Parallelisierung. Mit solch einem Verfahren können auch lebende Zellen über längere Zeit schonend untersucht werden, weil die maximale Lichtleistung deutlich reduziert werden kann, ohne die Bildqualität bei gegebener Bildaufnahmegeschwindigeit zu reduzieren. Gerade die maximale Leistung ist aber für einen Großteil der photoschädigenden Effekte entscheidend. Die Gesamtdosis hat offenbar einen geringeren Effekt.

Die Auswahleinrichtung kann prinzipiell auch dazu eingerichtet sein, dass zwischen dem ersten Strahlweg, dem zweiten Strahlweg und noch mindestens einem weiteren Strahlweg ausgewählt werden kann.

Die Auswahleinrichtung kann prinzipiell jede Art von strahlablenkender Einrichtung sein, die sich zum Umschalten von Strahlengängen eignet. Prinzipiell können hier auch elektrooptische Komponenten zum Einsatz kommen. Besonders vorteilhaft ist die Auswahleinrichtung ein verstellbarer Spiegel, der insbesondere in den Detektionsstrahlengang hineinbewegbar und aus diesem herausbewegbar ist. Diese Variante ist konstruktiv einfach und arbeitet zuverlässig. Beispielsweise kann der Spiegel verschwenk- und/oder verschiebbar sein. Bei weiteren vorteilhaften Varianten kann bei der Auswahleinrichtung auch die Polarisation des Lichts ausgenutzt werden. Beispielsweise können dichroitische Spiegel verwendet werden, deren Reflexions- und Transmissionseigenschaften empfindlich von der Wellenlänge und der Polarisation des Lichts abhängen.

Bevorzugt kann der verstellbare Spiegel in einen kollimierten Teil des Detektionsstrahlengangs hineinbewegt werden. Dadurch wird erreicht, dass die Position des Spiegels als solche nicht kritisch ist.

Als ortsauflösende Detektoren können prinzipiell segmentierte oder pixelierte Detektoren zum Einsatz kommen.

Bei einem besonders bevorzugten Ausführungsbeispiel ist der ortsauflösende Detektor und/oder der zweite ortauflösende Detektor ein, insbesondere kühlbarer, SPAD-Detektor (Single Photon Avalanche Diode Array) oder eine Anordnung mehrerer dieser Detektoren in einer geeigneten Konfiguration.

Diese Sensoren sind im Moment an einer Schwelle zur kommerziellen Nutzbarkeit in einem konfokalen System. SPAD-Detektoren, die auch als SPAD-Sensoren bezeichnet werden, haben eine Reihe von Vorteilen. So erreicht man damit Quanteneffizienzen bis über 80% bei bestimmten Wellenlängen. Die hohe Verstärkung des Einzelpixels erlaubt es, diese Sensoren im Einzelphotonenzählmodus (photon counting mode) zu betreiben. Weiterhin weisen diese Sensoren die notwendige Auslesegeschwindigkeit auf, um damit in der Scanning-Mikroskopie die notwendigen Ausleseraten im Bereich von 1 MHz zu erzielen. Auslesezeiten können dabei von etwa 1000 µs bis 10 ns variieren. Die notwendige Dynamik ist gegeben, wenn man die Anteile der Punktbildfunktion (PSF, Point Spread Function) auf entsprechend viele Pixel verteilt. Bei einer Totzeit von 50 ns kann man zum Beispiel Zählraten erreichen, die zwischen 1 und 5 MHz pro Einzelelement liegen. Verteilt man das Licht einer Punktverteilungsfunktion auf mehrere Pixel, beispielsweise 25, so sind Zählraten im Bereich von 100 MHz möglich, die für eine praktische Anwendung in der Laser-Scanning-Mikroskopie vollkommen hinreichend sind. Eine weitere Entwicklung der Elektronik wird zukünftig ein aktives "Quenchen" der Elektronenlawine im Sensor bei deutlich verkürzten Totzeiten erlauben, was die maximale Zählrate noch einmal erhöhen wird. Weiterhin weisen diese Sensoren die notwendige Anzahl von Pixeln auf, um die genannten Modi realisieren zu können. So sind Sensoren mit ca. 100 x 100 Pixeln und auch deutlich mehr bereits bekannt. Der geeignetste Sensor für die hier behandelten Messaufgaben ist also in der Tat ein sogenanntes SPAD-Array (SPAD = Single-Photon-Avalanche-Photodiode-Array). Dieser Sensortyp vereinigt alle notwendigen Eigenschaften, insbesondere eine Pixelstruktur zur ortsauflösenden Messung einer Lichtverteilung, eine hohe Sensitivität (hohe Quanteneffizienz bzw. Photon Detection Efficiency) und schließlich die Möglichkeit zum Zählen einzelner Photonen (Photon Counting) durch genügend hohe Verstärkung.

Allerdings sollten weitere Maßnahmen ergriffen werden, um diesen Sensor in einem erfindungsgemäßen System einsetzen zu können. Beispielsweise weisen derartige Sensoren im Vergleich zu Photomultipliern (PMT) ein deutlich höheres Dunkelrauschen auf. Um diesem Effekt entgegenzuwirken, sollten zwei Maßnahmen ergriffen werden. Zunächst ist bekannt, dass eine Kühlung das Dunkelrauschen deutlich verringert (durch Reduzieren der Temperatur um 8 K kann das Dunkelrauschen etwa halbiert werden). Zudem sollte der Sensor derart adaptiv schaltbar sein, dass man nur die Pixel wirklich betreibt, die auch für die jeweilige Signalgenerierung genutzt werden. Hierzu ist ein sogenannter Random Access (Einzelzugriffsmöglichkeit) bezüglich der Einzelpixel notwendig. Abhängig von der Lichtverteilung der Beleuchtung und dem gewählten Sensormodus wird somit ein bestimmtes Detektionsmuster auf dem Sensor ausgewählt.

Neben SPAD-Array-Sensoren (SPAD = Single-Photon-Avalanche-Photodiode-Array) können aber auch andere Sensoren verwendet werden. Beispielsweise kann der ortsauflösende Detektor und/oder der zweite ortauflösende Detektor ein Halbleiter-Detektor, insbesondere ein CCD- oder ein CMOS-Detektor, sein. Insbesondere können schnelle Kameras zum Einsatz kommen.

Besonders bevorzugt kann der ortsauflösende Detektor und/oder der zweite ortauflösende Detektor eine Kamera mit einem vorgeschalteten Bildverstärker, insbesondere einem vorgeschalteten Multichannelplate, sein.

Wenn eine besonders gute Empfindlichkeit gefragt ist, beispielsweise für die Untersuchung von sehr lichtschwachen Objekten, kann der ortsauflösende Detektor und/oder der zweite ortauflösende Detektor durch eine Mehrzahl von Photomultipliern gebildet sein. Dabei kann das Detektionslicht mit nichtabbildenden Mitteln umverteilt werden. Als ortsauflösende Detektoren, mit denen auch einzelne Photonen gezählt werden können, können auch Mikrokanalplatten (Microchannelplates) verwendet werden.

Weiterhin ist es möglich, die optische Anordnung mit herkömmlicher Photomultiplier-Technologie zu nutzen, indem man vor den Photomultipliern nichtabbildende optische Elemente nutzt. Dies können zum Beispiel optische Faserbündel sein (DE 10 2013 015 931 A1).

Schließlich sind auch weitere Festkörpersensoren wie Photodioden, insbesondere oder PIN-dioden, oder sog. SiPM, SiPMT, MPPC etc. als Detektoren einsetzbar.

Abhängig davon, welcher Detektor verwendet wird, können neben der reinen Bildgebung noch weitere Verfahren zur Anwendung kommen. So kann mit einem SPAD-Array (SPAD = Single-Photon-Avalanche-Photodiode-Array) auch die Lebenszeit von Farbstoffen gemessen und dargestellt werden (Fluorescence Lifetime Imaging). Ebenso können Korrelationen zwischen Signalen gemessen und im Sinn der Fluoreszenzkorrelationsspektroskopie (Fluorescence Correlation Spectroscopy) ausgewertet werden. Mit dem entsprechenden Anregungsmuster kann hiermit eine Multipunkt-FCS- oder eine Multipunkt-FLIM-Messung realisiert werden.

Wenn kameraartige Sensoren, beispielsweise Kameras vom Typ EMCCD, CMOS, sCMOS oder CCD, zum Einsatz kommen, können diese mit einem schnellen Bildverstärker, z.B. einem sogenannten Microchannel-Plate, ausgestattet sein. Weiterhin kann mit sogenannten Hybriddetektoren ebenfalls räumlich auflösend detektiert werden. Diese Sensoren bestehen aus einer Photokathode und einer APD-Struktur. Die durch den photoelektrischen Effekt aus der Photokathode ausgeschlagenen Elektronen werden dabei mit einer Hochspannung (ca. 8 kV) beschleunigt und treffen dann auf eine sensitive Fläche auf, die wie eine APD funktioniert. Es erfolgt ein Durchbruch und ein Lawineneffekt mit einer so hohen Verstärkung (Gain), dass Einzelphotonenmessungen möglich sind. Hybriddetektoren können auch räumlich auflösend eingesetzt werden.

Weiterhin kann die Umverteilung von Licht auf andere Detektoren mit nichtabbildenden Elementen, wie optischen Fasern oder Faserbündeln, erfolgen. Dies könnten zum Beispiel Photomultiplier sein. Vorteilhaft können diese mit einer Photokathode mit GaAsP ausgestattet sein. In der optischen Anordnung sind Variationen dahingehend zulässig, dass alle spektralen Anteile mit dem bildgebenden Sensor detektiert werden.

Bei einer weiteren bevorzugten Ausgestaltung der erfindungsgemäßen Detektionsvorrichtung ist mindestens eine, insbesondere zweidimensionale, Multilinsenanordnung vorhanden und eine Verstelleinrichtung ist vorhanden, um die Multilinsenanordnung in den Detektionsstrahlengang hinein und aus diesem heraus zu bewegen. Diese Variante ermöglicht bei in den Strahlengang eingebrachter Multilinsenanordnung die Ausnutzung der Eingangslochblende durch eine Mehrzahl von Strahlenbündeln und damit die Multispot-Konfokalmikroskopie. Dabei müssen bei der Multilinsenanordnung nicht notwendig alle Linsen ausgenutzt werden. Beispielsweise kann bei einer zweidimensionalen Multilinsenanordnung nur eine Reihe von Linsen zum Einsatz kommen.

Die vorrichtungsmäßige Ausgestaltung mit mindestens einer Multilinsenanordnung ermöglicht in vorteilhafter Weise eine Weiterbildung des erfindungsgemäßen Verfahrens, die als spektral aufgelöste Multipunktrastermikroskopie bezeichnet wird. Dabei wird die Probe mit mehreren Spots des Beleuchtungslichts, insbesondere mit in einer Linie liegenden Spots, gleichzeitig abgerastert, wobei im Detektionsstrahlengang strahlabwärts von der Eingangslochblende eine Multilinsenanordnung positioniert ist und die Anzahl der Linsen dieser Multilinsenanordnung mindestens so groß ist wie die Anzahl der Spots des Beleuchtungslichts, mit denen die Probe abgerastert wird. Weiterhin wird mit der Auswahleinrichtung der erste Strahlweg für das zu vermessende Detektionslicht ausgewählt, die auf die einzelnen Spots des Beleuchtungslichts zurückgehenden Bündel des Detektionslichts werden spektral räumlich aufgespalten, die so erhaltenen Strahlenbündel werden mit der Manipulationseinrichtung, insbesondere in der spektralen Auswahlebene, manipuliert und die manipulierten Strahlenbündel werden detektiert.

Bei dieser Verfahrensvariante können die spektralen Verteilungen der einzelnen, auf die einzelnen Spots des Beleuchtungslichts zurückgehenden Bündel des Detektionslichts gezielt manipuliert werden.

Grundsätzlich kann diese spektral aufgelöste Multipunktrastermikroskopie betrieben werden wenn der verstellbare Spiegel, der die Auswahleinrichtung bildet, in den Strahlengang hineingefahren ist. Das heißt, dass dann in dem ersten Strahlweg das Detektionslicht mindestens einmal an dem Spiegel reflektiert wird. Besonders bevorzugt ist aber der Spiegel zur Auswahl des ersten Strahlwegs aus dem Strahlengang herausgefahren oder entfernt. Das heißt, dass bei dieser Variante das Licht, welches über den ersten Strahlweg in die Detektionsebene gelangt, nicht an dem Spiegel reflektiert wird.

Die Manipulation der spektralen Zusammensetzung kann prinzipiell beliebige Veränderungen beinhalten. Erfindungsgemäß ist das Manipulieren der auf die einzelnen Spots des Beleuchtungslichts zurückgehenden Strahlenbündel für mindestens einen, insbesondere für alle, der Spots ein Auswählen mindestens einer, insbesondere einer einzigen, spektralen Komponente. In Abstimmung mit der spektralen Anregung des entsprechenden Spots des Beleuchtungslichts kann dann gezielt beispielsweise die Emissionswellenlänge beziehungsweise das spektrale Emissionswellenlängenband eines bestimmten Farbstoffs oder es können gezielt zwei oder noch mehr Emissionswellenlängen beziehungsweise spektrale Emissionswellenlängenbänder ausgewählt werden.

Als dispersive Einrichtung kommt jede Einrichtung in Betracht, mit der die gewünschte spektrale räumliche Aufspaltung bewerkstelligt werden kann. Beispielsweise können beugende Komponenten wie Gitter zum Einsatz kommen. Besonders bevorzugt ist eine Detektionsvorrichtung, bei der die dispersive Einrichtung ein Prisma ist. Dadurch sind kompakte und lichteffiziente Aufbauten möglich, bei denen von der Manipulationseinrichtung zurückgestrahltes Detektionslicht in dem ersten Strahlweg die dispersive Einrichtung in umgekehrter Richtung erfindungsgemäß erneut durchläuft, insbesondere dergestalt, dass das zurückgestrahlte Detektionslicht nach Durchlaufen der dispersiven Einrichtung in umgekehrter Reihenfolge keine signifikanten chromatischen Aberrationen aufweist und eine beugungsbegrenzte Abbildung eines Pinhole oder eines Punktemitters in einer Probe möglich ist.

Bei dem entsprechenden Verfahren durchlaufen die manipulierten Strahlenbündel die dispersive Einrichtung in dem ersten Strahlweg in umgekehrter Richtung erneut.

Bei der erfindungsgemäßen Detektionsvorrichtung weist die Manipulationseinrichtung eine spektrale Auswahlebene auf, in der verstellbare Strahlumlenkmittel angeordnet sein sind. Durch Umlenken von einzelnen spektralen Anteilen können diese Anteile gezielt in Richtung des oder eines Detektors weitergeleitet oder aus dem zu detektierenden Licht entfernt werden.

Erfindungsgemäß befindet sich die spektrale Auswahlebene in einer von der Detektionsebene verschiedenen Ebene, die aber zur Detektionsebene optisch konjugiert ist.

Weitere Auswertungsmöglichkeiten ergeben sich, wenn strahlabwärts von der spektralen Auswahlebene mindestens ein zweiter Detektor angeordnet ist zum Nachweis von Detektionslicht, das durch die spektrale Auswahlebene hindurchtritt, also transmittiert wird. Prinzipiell kann dann das Detektionslicht spezifisch für die einzelnen Beleuchtungsspots spektral aufgelöst ausgewertet werden.

Die spektrale Selektion mit Hilfe der Manipulationseinrichtung kann grundsätzlich auf verschiedene Art und Weise erfolgen. Wesentlich ist, dass die gewünschten spektralen Komponenten zu einem Detektor geleitet werden. Die Manipulationseinrichtung, insbesondere die Strahlumlenkmittel in der spektralen Auswahlebene, kann beziehungsweise können gebildet sein durch eine opto-mechanische Anordnung mit Spiegeln, insbesondere beweglichen Spiegeln, oder anderen lichtlenkenden Elementen. Beispielsweise kann ein Mikrospiegelarray zum Einsatz kommen. Vorteilhaft kann auch sein, einen sogenannten SLM (SLM = Spatial Light Modulator) einzusetzen. Mit diesem können die gewünschten spektralen Anteile derart beeinflusst werden, dass sie zum bildgebenden Sensor gelenkt werden. Zudem sind hier sogenannte DMD (Digital Mirror Devices) oder auch MEMS (MEMS = Micro Electro-Mechanical Systems) mit einer Lichtleitfunktion nutzbar.

Ein bedeutsamer Gesichtspunkt der Erfindung ist weiterhin, dass die Manipulationseinrichtung und die Detektionsebene voneinander im Strahlengang getrennt sind. Die Manipulationseinrichtung und die Detektionsebene sind also voneinander räumlich und optisch getrennt. Sie können sich aber bevorzugt in zueinander optisch konjugierten Ebenen befinden.

Das Positionieren einer, insbesondere zweidimensionalen, Multilinsenanordnung im Detektionsstrahlengang ermöglicht außerdem eine besonders bevorzugte Verfahrensvariante, die als hochparallelisierte Multipunktrastermikroskopie bezeichnet wird. Dabei wird die Probe mit vielen Spots des Beleuchtungslichts, die insbesondere in einem zweidimensionalen Muster angeordnet sind, gleichzeitig abgerastert, wobei im Detektionsstrahlengang strahlabwärts von der Eingangslochblende die mindestens eine, insbesondere zweidimensionale, Multilinsenanordnung positioniert ist und die Anzahl der Linsen dieser Multilinsenanordnung mindestens so groß ist wie die Anzahl der Spots des Beleuchtungslichts mit denen die Probe abgerastert wird. Weiterhin wird mit der Auswahleinrichtung der zweite Strahlweg für das zu vermessende Detektionslicht ausgewählt und die auf die einzelnen Spots des Beleuchtungslichts zurückgehenden Bündel des Detektionslichts werden detektiert. Dieses Verfahren eignet sich besonders für empfindliche Proben, die rasch ausbleichen.

Im Stand der Technik DE 10 2014 107 606 A1 können zwar durch Schalten des Strahlwegs verschiedene Anregungs- und Detektionsmodi mit nur einem Sensor realisiert werden. Eine Multipunktbeleuchtung/-detektion mit verschiedenen Parallelisierungsgraden ist dabei aber im Unterschied zur vorliegenden Erfindung nicht möglich.

Grundsätzlich muss die Beleuchtung in dem Mikroskop, welches an die erfindungsgemäße Detektionsvorrichtung angeschlossen ist, an das jeweils zum Einsatz kommende Verfahren angepasst werden. Bei bevorzugten Varianten des erfindungsgemäßen Verfahrens wird zur Beleuchtung in einer Pupillenebene des Beleuchtungsstrahlengangs ein beugendes Element, insbesondere ein SLM (Spatial Light Modulator) oder ein Dammann-Gitter, positioniert. Damit können die gewünschten Beleuchtungsmuster, beispielsweise ein- oder zweidimensionale Multipunktmuster oder auch Beleuchtungslinien sehr definiert erzeugt werden.

Insbesondere bei der spektral aufgelösten Multispot-Konfokalmikroskopie wird besonders bevorzugt als ortsauflösender Detektor ein, insbesondere gekühlter, SPAD-Detektor (SPAD = Single-Photon-Avalanche-Photodiode-Array) verwendet. Das Signal- zu Rauschverhältnis der Messdaten kann dabei gesteigert werden, wenn bei dem SPAD-Array (SPAD = Single-Photon-Avalanche-Photodiode-Array) nur diejenigen Pixel betrieben werden, die für die jeweils nötige Signalgenerierung genutzt werden.

Die erfindungsgemäße Optikgruppe ermöglicht schließlich eine weitere vorteilhafte Verfahrensvariante zur direkten Bildgebung, die als Weitfeldmikroskopie oder auch als gerasterte Weitfeldmikroskopie bezeichnet werden kann. Dabei wird die Probe mindestens in einem Sichtfeldbereich gleichzeitig mit Beleuchtungslicht bestrahlt und mit der Auswahleinrichtung wird der zweite Strahlweg für das zu vermessende Detektionslicht ausgewählt, wobei der Sichtfeldbereich auf den ortsauflösenden Detektor abgebildet wird und wobei der Detektionsstrahlengang frei ist von Multilinsenanordnungen und einer Detektionslochblende.

Voraussetzung für dieses Verfahren ist außerdem, dass das optische System das Licht für das Sichtfeld übertragen kann. Weil dieses übertragbare Sichtfeld für die in Frage kommenden optischen Systeme von konfokalen Mikroskopen üblicherweise nicht besonders groß sind, ist eine Weiterbildung dieses Verfahrens bevorzugt, bei der der Sichtfeldbereich über die Probe gerastert wird. Man kann in diesem Zusammenhang auch von einer Erhöhung des Lichtleitwerts des konfokalen Mikroskops zur Anpassung an die Detektionsvorrichtung sprechen. Dann können prinzipiell durch Zusammensetzen der bei jeder Scannerposition jeweils gewonnenen Einzelbilder Gesamtbilder eines großen Probenbereichs gewonnen werden.

Das erfindungsgemäße Mikroskop ist bevorzugt ein konfokales Laser-Scanning-Mikroskop. Das scannende System kann dabei ein konfokales System nach dem Stand der Technik sein. Grundsätzlich ist auch ein System nutzbar, bei dem zum Beispiel die Probe selbst verfahren wird.

Weitere Vorteile und Merkmale der Erfindung werden im Folgenden mit Bezug auf die Figuren beschrieben. Es zeigt:
- Figur 1:: eine perspektivische und schematische Ansicht einer erfindungsgemäßen Detektionsvorrichtung;
- Figur 2:: eine Draufsicht auf die Detektionsvorrichtung der Figur 1;
- Figur 3:: ein Detail der Detektionsvorrichtung aus den Figuren 1 und 2;
- Figur 4:: eine schematische Darstellung des ortsauflösenden Detektors bei einer erfindungsgemäßen Detektionsvorrichtung für die Verfahrensvariante spektral aufgelöste Multispot-Konfokalmikroskopie;
- Figur 5:: eine schematische Darstellung des ortsauflösenden Detektors bei einer erfindungsgemäßen Detektionsvorrichtung für die Verfahrensvariante hochparallelisierte Multispot-Konfokalmikroskopie;
- Figur 6:: eine schematische Darstellung des ortsauflösenden Detektors bei einer erfindungsgemäßen Detektionsvorrichtung für die Verfahrensvariante gerasterte Weitfeldmikroskopie.

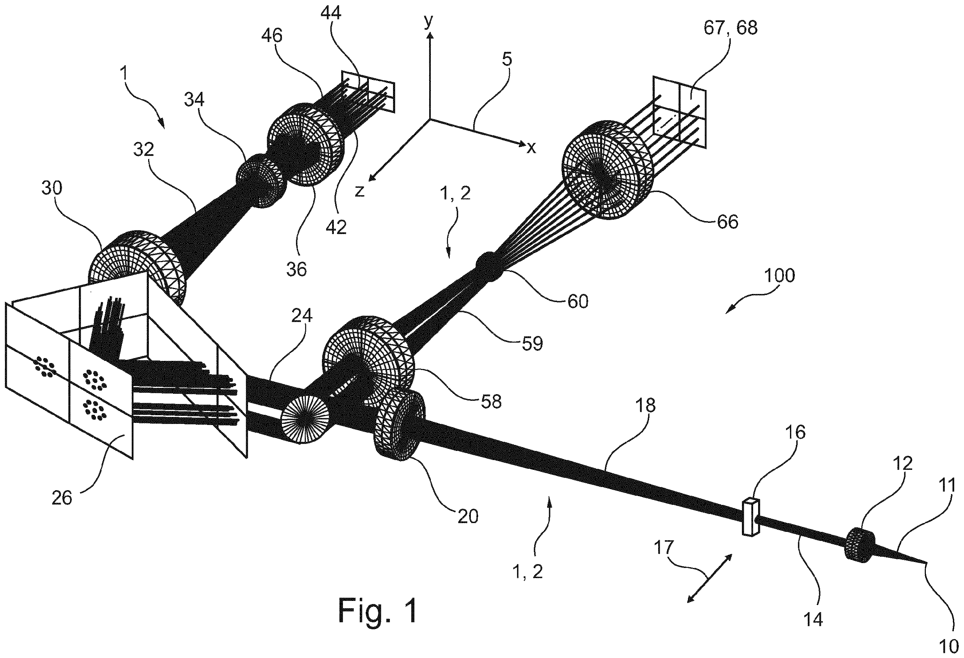

Ein Ausführungsbeispiel einer erfindungsgemäßen Detektionsvorrichtung 100 für ein Laserscanningmikroskop wird mit Bezug auf die Figuren 1 bis 3 im Einzelnen erläutert. Gleiche und gleichwirkende Komponenten sind in den Figuren in der Regel mit denselben Bezugszeichen gekennzeichnet.

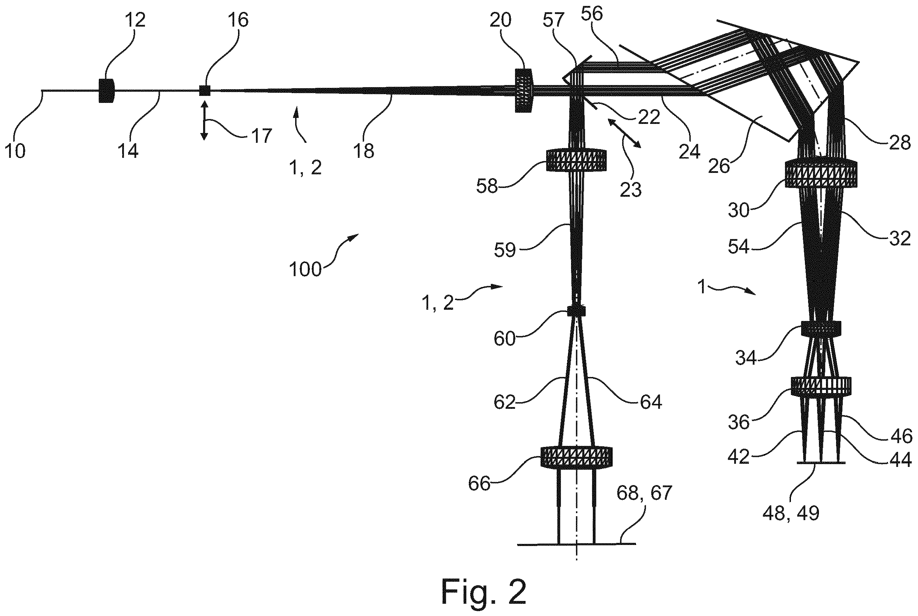

Die in den Figuren 1 und 2 schematisch dargestellte Detektionsvorrichtung 100 weist als wesentliche Komponenten eine Eingangsebene 10, einen ortsauflösenden segmentierten Detektor 68 und einen Detektionsstrahlengang mit einem ersten Strahlweg 1 und einem zweiten Strahlweg 2 auf. In dem ersten Strahlweg 1 ist eine dispersive Einrichtung 26 vorhanden und ein verstellbarer Spiegel 22 dient als Auswahleinrichtung zum Umschalten zwischen dem ersten Strahlweg 1 und dem zweiten Strahlweg 2. In der Eingangsebene 10 kann für bestimmte Anwendungen eine Eingangslochblende 10, die auch als Eingangspinhole bezeichnet werden kann, vorhanden sein.

Die Eingangslochblende, die in den Figuren 1 und 2 nicht als solche dargestellt ist, kann sich an dem mit dem Bezugszeichen 10 gekennzeichneten Ort befinden. Hier liegt die Eingangsebene 10, die auch als eine zur Fokalebene des Objektivs konjugierte Ebene bezeichnet werden kann. Von dieser Eingangsebene 10 geht ein Strahlenbündel des zu vermessenden Detektionslichts 11 aus und wird mit einer ersten Sammellinse 12 kollimiert und auf eine verstellbare Multilinsenanordnung 16 geleitet, die mit Hilfe eines nicht dargestellten Mechanismus für bestimmte Anwendungen aus dem Strahlengang entfernt werden kann (Doppelpfeil 17). Die von der Multilinsenanordnung 16 ausgehende Strahlung 18 gelangt zu einer zweiten Sammellinse 20, wird von dieser zweiten Sammellinse 20 kollimiert und gelangt von dort auf den verstellbaren Spiegel 22, der mit Hilfe eines nicht dargestellten Mechanismus aus dem Strahlengang herausbewegt (Doppelpfeil 23), beispielsweise herausgezogen oder herausgeschwenkt werden kann. Der verstellbare Spiegel 22 ist in Figur 1 auf Gründen der Übersichtlichkeit nicht dargestellt.

Wenn sich der Spiegel 22, durch den die Auswahleinrichtung zum Auswählen des ersten Strahlwegs 1 oder des zweiten Strahlwegs 2 für das zu vermessende Detektionslicht 11 verwirklicht wird, im Strahlengang befindet, wie in Figur 2 dargestellt, gelangt das am Spiegel 22 reflektierte Detektionslicht 59, 62, 64 über die Linsen 58, 60, 66 in die Detektionsebene 67 und auf den ortsauflösenden Detektor 68. Das entspricht dem zweiten Strahlweg 2. Mit Hilfe des ortsauflösenden Detektors 68, der sich im Hinblick auf das Mikroskop in einer Zwischenbildebene des Mikroobjektivs befindet, wird das in die Eingangsebene 10 eintretende zu vermessende Detektionslicht 11 nachgewiesen.

Wenn der verstellbare Spiegel 22 mit Hilfe des nicht dargestellten Mechanismus aus dem Strahlengang entfernt wurde, beispielsweise herausgezogen oder herausgeschwenkt wurde (Doppelpfeil 23), gelangt das zu vermessende Detektionslicht 24 von der Linse 20 auf ein Prisma 26, welches eine dispersive Einrichtung verwirklicht und zum räumlichen spektralen Aufspalten des zu vermessenden Detektionslichts 24 dient. Die Verfahrensvarianten, bei denen der variable Spiegel 22 aus dem Strahlengang herausgezogen ist, beziehen sich insbesondere auf Verfahren zur spektral aufgelösten konfokalen Multispotscanningmikroskopie. Dabei wird eine Probe mit mehreren Lichtspots gleichzeitig beleuchtet und die von diesen beleuchteten Probenorten ausgehende Strahlung wird simultan detektiert. Das Detektionslicht nimmt dabei den ersten Strahlweg.

Beispielsweise kann bei der in Fig. 2 dargestellten Situation das zu vermessende Detektionslicht 14, 18, 24 senkrecht zur Papierebene, also in y-Richtung (siehe Koordinatensystem 5 in Fig. 1) in eine Mehrzahl von Strahlenbündel, die jeweils zu unterschiedlichen beleuchteten Probenorten gehören, aufgespalten sein. Dieses in Richtung senkrecht zur Papierebene aufgespaltene Detektionslicht 24 tritt in das Prisma 26 ein und wird von diesem in x-Richtung (siehe Koordinatensystem 5 in Fig. 1) aufgespalten. Über die Linsen 30, 34 und 36 wird das räumlich spektral aufgespaltene Detektionslicht 28, 32 in eine spektrale Auswahlebene 48 abgebildet.

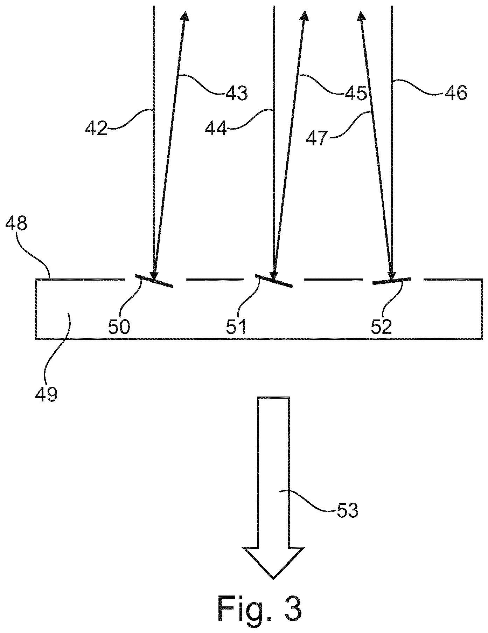

In der spektralen Auswahlebene 48 befindet sich eine Manipulationseinrichtung 49 zum Manipulieren des spektral räumlich aufgespaltenen Detektionslichts. Ein Beispiel für eine solche Manipulationseinrichtung 49 wird weiter unten im Zusammenhang mit Fig. 3 erläutert. Mit Hilfe der Manipulationseinrichtung 49 können beispielsweise aus den spektral aufgespaltenen Teilstrahlen einzelne spektrale Komponenten 42, 44, 46 zurückgeleitet und/oder unterdrückt werden. Von der Manipulationseinrichtung 49 werden also einzelne ausgewählte spektrale Komponenten zurückgestrahlt und gelangen sodann auf demselben optischen Weg zurück, also über die Linsen 36, 34, 30 auf das Prisma 26. Über das Prisma 26 führt der erste Strahlweg sodann weiter über einen festen Spiegel 57 und von dort über die Linsen 58, 60, 66 in die Detektionsebene 67 und auf den ortsauflösenden Detektor 68.

Bei dem in den Figuren 1 und 2 gezeigten optischen Aufbau wird also das von der Pinholeebene 10 kommende zu vermessende Detektionslicht 11 entweder über eine optische Vorrichtung zur Selektion der spektralen Anteile (Manipulationseinrichtung 49) in die Detektionsebene 67 geleitet oder direkt in die Detektionsebene 67 und auf den ortsauflösenden Detektor 68 abgebildet. Dabei können spektrale Anteile mit der Manipulationseinrichtung 49, die auch als spektrale Selektionseinheit bezeichnet werden kann, in der spektralen Auswahlebene 48 ausgewählt und auf den ortsauflösenden Detektor 68 geleitet werden.

Von besonderer Bedeutung für die Erfindung ist, dass bei beiden Varianten, also unabhängig davon, ob das Detektionslicht über den ersten oder den zweiten Strahlweg geleitet wird, die Eingangsebene beugungsbegrenzt in die Detektionsebene abgebildet wird.

In dem Fall, wo das Detektionslicht über den ersten Strahlweg in die Detektionsebene 67 geleitet wird, erfolgt die beugungsbegrenzte Abbildung außerdem spektral aufgelöst, wobei die spektrale Auflösung sowie die spektrale Selektion durch die jeweilige Einstellung des spektralen Manipulationsmoduls gegeben ist.

Erfindungsgemäß sind demgemäß die ersten optischen Strahlführungsmittel 30, 34, 36, 57 zusammen mit der dispersiven Einrichtung 26 und der Manipulationseinrichtung 49 angeordnet und eingerichtet zum Erzeugen einer spektral aufgetrennten und beugungsbegrenzten Abbildung der Eingangsebene 10 in die Detektionsebene 67.

Für den Fall, wo das Detektionslicht über den zweiten Strahlweg in die Detektorebene sind die zweiten optischen Strahlführungsmittel 20, 22, 58, 60, 66 ebenfalls angeordnet und eingerichtet zum Erzeugen einer beugungsbegrenzten Abbildung der Eingangsebene 10 in die Detektionsebene 67.

Details einer Manipulationseinrichtung 49 werden mit Bezug auf Fig. 3 erläutert. Dort ist schematisch eine Manipulationseinrichtung 49, bei der es sich im gezeigten Beispiel um ein Mikrospiegelarray 49 handeln soll. Dieses Mikrospiegelarray 49 weist eine Mehrzahl von jeweils individuell verstellbaren Spiegeln auf, von denen drei Spiegel 50, 51, 52 beispielhaft dargestellt sind. Diese Spiegel 50, 51, 52 befinden sich in der spektralen Auswahlebene 48, die ihrerseits in einer zur Objektebene des Mikroskopobjektivs konjugierten Ebene, mit anderen Worten also in einer Zwischenbildebene, liegt. In Wirklichkeit weist das Mikrospiegelarray 49 eine größere Zahl von Mikrospiegeln 50, 51, 52 auf. Wiederum können diese Spiegel aber auch makroskopisch ausgeführt sein und sich in geeigneter Weise in den Strahlengang in der spektralen Auswahlebene einbringen lassen.

In dem in Fig. 3 gezeigten Ausführungsbeispiel treffen drei Strahlen 42, 44, 46, die von dem Prisma 26 spektral räumlich getrennt wurden, ursprünglich aber von ein und demselben beleuchteten Probenort ausgingen, auf die Mikrospiegel 50, 51 beziehungsweise 52 auf. Die Strahlen 42, 44, 46 werden in die Strahlen 43, 45 beziehungsweise 47 reflektiert. Durch eine gezielt gewählte Einstellung der Spiegel 50, 51, 52 kann beispielsweise bewirkt werden, dass nur bestimmte gewünschte spektrale Komponenten (z.B. die gezeigten Strahlen 43, 45, 47) auf dem zweiten Strahlweg zurückgestrahlt werden, in die Detektionsebene 67 und auf den ortsauflösenden Detektor 68 gelangen und dort nachgewiesen werden. Prinzipiell können die Mikrospiegel 50, 51, 52 des Mikrospiegelarrays 49 auch so eingestellt werden, dass das einfallende Licht durch das Mikrospiegelarray 49 transmittiert wird. Es kann dann, weil es bereits räumlich spektral zerlegt ist, strahlabwärts von dem Mikrospiegelarray 49 entweder spektral aufgelöst detektiert werden oder in seiner spektralen Gesamtheit mit weiteren, in den Figuren nicht gezeigten Detektoren nachgewiesen werden. Schematisch ist dieses durch das Mikrospiegelarray 49 transmittierte Licht in Fig. 3 durch den Pfeil 53 angedeutet.

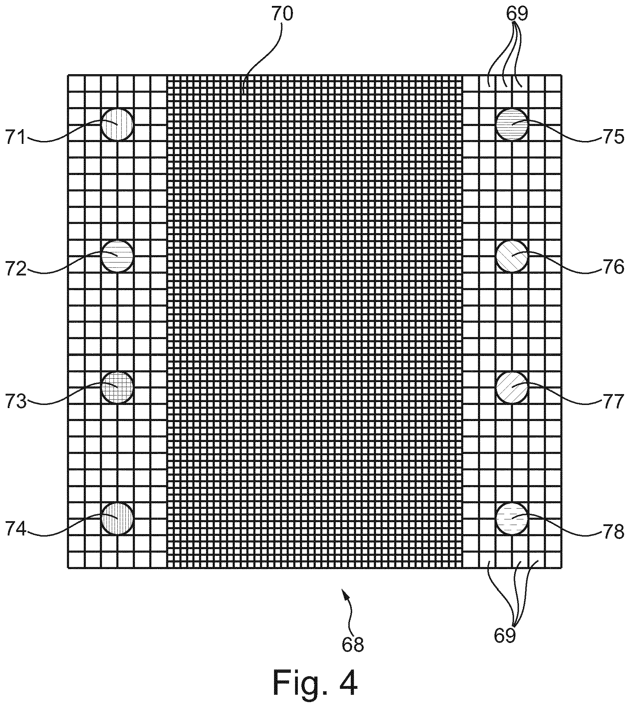

Fig. 4 zeigt eine beispielhafte Lichtverteilung auf den ortsauflösenden Detektor 68 für den Fall des Mikroskopieverfahrens der spektral selektiven konfokalen Detektion. Dabei wurde angenommen, dass in einer Probe an vier verschiedenen Orten jeweils spektral angeregt wurde. Anschließend wurden alle von diesen angeregten Orten ausgehenden Emissionsstrahlen durch die Mikroskopanordnung und durch die Pinholeebene 10 hindurch bis zur spektralen Auswahleinheit also der Manipulationseinrichtung 49 propagiert. Dort werden die interessierenden spektralen Anteile in die Ebene des ortsauflösenden Detektors 68 wie beschrieben (Figur 3) zurückgelenkt und werden dort räumlich aufgelöst detektiert.

Die optische Güte der gesamten Anordnung ist dabei so gut, dass ein leuchtender Punkt in der Objektebene eine Punktbildfunktion auf dem pixelierten Sensor, also dem ortsauflösenden Detektor 68, mit einer beugungsbegrenzten Güte erzeugt, so dass das Verfahren des "photon reassignment" zur Anwendung kommen kann. Insbesondere muss hierfür eine Farbkorrektur geeignet ausgeführt werden. Aufgrund der spektralen Aufspaltung des Detektionslichts am Prisma 26 laufen die einzelnen Wellenlängen vom Prisma 26 bis zur spektralen Auswahlebene 48 auf unterschiedlichen Pfaden durch die Optik. In der spektralen Auswahlebene 48 werden zudem bestimmte spektrale Anteile mit unterschiedlichen, gezielt eingestellten Winkeln reflektiert, so dass diese dann auf nochmals verschiedenen Pfaden durch die Optik zurücklaufen, um danach im Prisma 26 jeweils spektral vereinigt zu werden. Die verschiedenen Pfade durch die Optik erfordern eine gezielte Farbkorrektur der genannten Optik. So spielt ein reiner Farbquerfehler der Optik keine Rolle, ein farbabhängiger Öffnungsfehler dagegen ist äußerst kritisch. Allgemein erfordert der Aufbau eine gute Farbkorrektur aller geraden Aberrationen, wie Fokus, Öffnungsfehler und Astigmatismus, während die ungeraden Aberrationen, wie Verzeichnung und Koma, eine untergeordnete Rolle spielen und sich im doppelten Durchgang durch die Optik kompensieren.

Zusätzlich kann das Signal damit noch entfaltet werden. Die spektrale Auflösung ist nur durch die Stellgenauigkeit der Komponenten der spektralen Auswahleinrichtung, also der Manipulationseinrichtung 49, im Verhältnis zur Dispersionsstärke des dispersiven Elements, im gezeigten Ausführungsbeispiel, also des Prismas 26, begrenzt.

Bei dem in Fig. 4 gezeigten Beispiel ist der ortsauflösende Detektor 68 schematisch mit einer Mehrzahl von Pixeln 69 dargestellt. Beispielsweise handelt es sich um ein gekühltes SPAD-Array (SPAD = Single-Photon-Avalanche-Photodiode-Array). Zur Minimierung des Rauschens werden dabei vorteilhaft nur die Pixel in den Bereichen um die angedeuteten Lichtverteilungen 71 bis 78 genutzt. In dem zentralen Bereich 70, in dem kein Detektionslicht erwartet wird, ist keine Bias-Spannung angelegt oder jedenfalls ist die Spannung unterhalb einer Durchbruchschwelle, weshalb der gesamte Bereich 70 nicht zum Signal und auch nicht zum Rauschen beiträgt. Das Signal-zu-Rausch-Verhältnis kann deshalb verbessert werden. Im Einzelnen gehören die Punkte 71 und 75 zur unterschiedlichen spektralen Komponente eines ersten Probenpunkts. Entsprechend gehören die Punkte 72 und 76 zu einem zweiten beleuchteten Probenpunkt, die Punkte 73 und 77 zu einem dritten beleuchteten Probenpunkt und schließlich die Punkte 74 und 78 zu einem vierten beleuchteten Probenpunkt. Die Pixel 69 sind schematisch dargestellt. In Wirklichkeit können die Pixel kleiner sein, so dass die Lichtpunkte 71 bis 78 eine größere Anzahl von Pixeln, beispielsweise 9 Pixel, überlappen. Weil in der spektralen Auswahlebene 48 mit Hilfe der Manipulationseinrichtung 49, insbesondere also des Mikrospiegelarrays das Zurückstrahlen der einzelnen spektralen Komponenten für jeden einzelnen beleuchteten Probenpunkt individuell eingestellt werden kann, kann das Licht in jedem der Punkte 71 bis 78 eine unterschiedliche Wellenlänge beziehungsweise einen unterschiedlichen spektralen Bereich aufweisen, wobei der spektrale Bereich definiert ist durch seine spektrale Berandung und damit seine Lage im Spektrum und seine spektrale Breite. Dieser Umstand ist in Fig. 4 durch eine jeweils unterschiedliche Schraffierung der Punkte 71 bis 78 schematisch dargestellt.

Tatsächlich ist es mit einer Einzelpunktanregung möglich, mit der erfindungsgemäßen Detektionsvorrichtung bis zu drei nahezu beliebig auswählbare spektrale Kanäle zu detektieren, wobei zwei dieser Kanäle räumlich aufgelöst detektierbar sind (Möglichkeit des sogenannten Photon Reassignment).

Unter räumlicher Auflösung wird hier nicht die räumliche Auflösung eine Probe verstanden. Vielmehr soll die immer an der gleichen Stelle liegende PSF, also die Punktverteilungsfunktion, räumlich überabgetastet werden. Die PSF wird also in diesem Sinn im Detektorraum räumlich aufgelöst gemessen.

Bei Anregung der Probe mit N spektralen Laserpunkten kann die Detektion von 3xN einstellbaren spektralen Kanälen erfolgen, wobei 2xN Kanäle räumlich aufgelöst detektiert werden können. Zudem ist es möglich, N Spektren mit einem Liniensensor direkt aufzunehmen.

Lebende Zellen weisen eine besonders hohe Sensitivität gegenüber zu starker Lichteinstrahlung auf. Einerseits werden dabei die Fluoreszenzfarbstoffe zerstört. Man spricht dabei von Fotobleichen. Andererseits kann es zu einer direkten Schädigung der Zellen kommen, zum Beispiel durch Schädigung der DNA durch Mehrphotonenprozesse. Diese Prozesse hängen in der Regel weniger von der Lichtdosis als vielmehr von der optischen Spitzenleistung oder, was äquivalent ist, von der Intensität ab. Mit anderen Worten ist der Photonenfluss oder die Photonendichte für diese Prozesse entscheidend. Sinnvolle Signal-zu-Rausch-Verhältnisse (SNR) haben in der biologischen Bildgebung eine untere Grenze. Andererseits soll in der Regel die Bildaufnahmerate einen gewissen Wert erreichen. Um bei einer gegebenen Probe und einer gegebenen Bildaufnahmerate ein bestimmtes Signal-zu-Rausch-Verhältnis zu erreichen, wird daher in der Regel die Laserleistung der Anregungsstrahlung erhöht. Aus den genannten Gründen der Probenschädigung kann dies bei lebenden Zellen aber problematisch sein. In diesen Fällen sollte es möglich sein, das Mikroskop auf einen besonders probenschonenden Modus umzuschalten. Will man dabei die Vorzüge der Laser-Scanning-Mikroskopie nicht aufgeben, die in einer hochauflösenden Bildgebung mit der Möglichkeit optischer Schnitte (optisches "Sectioning") bestehen, so bleibt nur die Möglichkeit, die Aufnahme möglichst stark zu parallelisieren. Die vorliegende Erfindung leistet dies.

Das Schaltelement in der Detektionsvorrichtung, also der verstellbare Spiegel 22, wird dabei wieder auf den zweiten Strahlweg 2 eingestellt, also in den Strahlengang hineinbewegt (Doppelpfeil 23). Außerdem wird in den Strahlengang die Mikrolinsenanordnung 16 (Doppelpfeil 17) eingeführt. Dabei kann für die spektral aufgelöste konfokale Mehrpunkt-Mikroskopie, bei welcher der erste Strahlweg 1 über die spektrale Auswahlebene 48 genutzt wurde, dieselbe Multilinsenanordnung 16 verwendet werden wie für die hochparallelisierte Scanning-Mikroskopie, die nun beschrieben wird. Wichtig ist nur, dass die Anzahl der Mikrolinsen der Multilinsenanordnung 16 der maximalen Anzahl der zu vermessenden Fokalpunkte (Messspots) entspricht. Außerdem legt die Multilinsenanordnung 16 den Abstand der Fokalpunkte, der auch als "pitch" bezeichnet wird, fest. Dies erfolgt abgestimmt auf die Multistrahl-Beleuchtung.

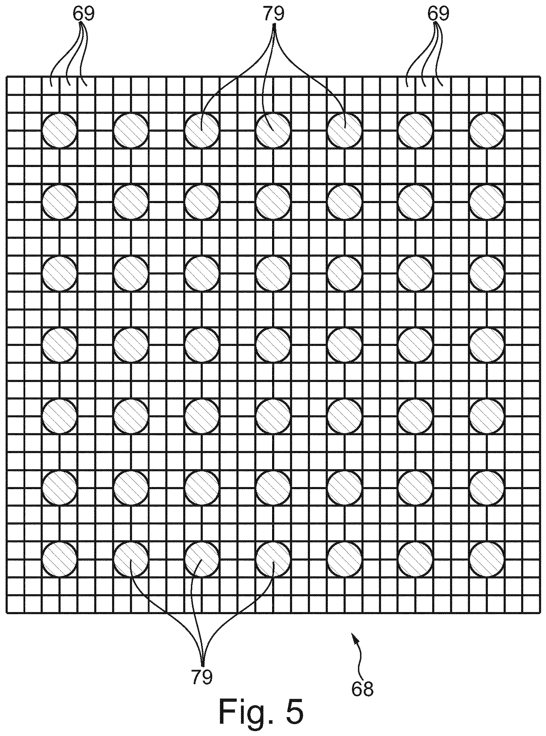

In Fig. 5 ist schematisch eine Detektionssituation für die hochparallelisierte Multipunktrastermikroskopie dargestellt. Auf den ortsauflösenden Detektor 68 fällt dabei eine Vielzahl von Lichtspots 79, die jeweils zu einem unterschiedlichen beleuchteten Ort in der Probe gehören. Im Unterschied zur spektral aufgelösten Mehrpunkt-Scanningmikroskopie, bei welcher der zweite Strahlweg über die spektrale Auswahlebene 48 genutzt wurde, weisen die Lichtspots 59 im allgemeinen kein gezielt eingestelltes spektrales Profil auf. Die spektrale Zusammensetzung der Lichtspots 49 ergibt sich vielmehr aus der jeweiligen spektralen Antwort des jeweils beleuchteten Probenpunkts auf das eingestrahlte Licht. Auch hier sind die Pixel 69 schematisch dargestellt und in Wirklichkeit können die Pixel kleiner sein, so dass die Lichtpunkte 79 eine größere Anzahl von Pixeln, beispielsweise 9 Pixel, überlappen.

Natürlich ist es für jeden Anwendungsfall notwendig, ein Anregungsfeld mit der entsprechenden Geometrie in die Probe einzustrahlen. Beispielsweise muss im Fall der hochparallelisierten Multispot-Scanning-Mikroskopie ein geeignetes Beleuchtungsmuster mit dem richtigen Abstand der einzelnen Fokalpunkte auf die Probe eingestrahlt werden. Dies kann auf grundsätzlich verschiedene Arten erfolgen. Einerseits kann eine direkte Beleuchtung des Mikroskops mit einem Multipunktmuster erfolgen. Weiterhin ist es möglich, in einer ruhenden Pupille, die sich am Laser-Scanning-Mikroskop zum Beispiel zwischen dem Hauptfarbteiler und dem Scan-Objektiv befinden kann, mit einem räumlichen Lichtmodulator (SLM, Spatial Light Modulator) die entsprechenden Muster zu schalten. Beispielsweise kann auch ein sogenanntes Dammann-Gitter zum Einsatz kommen.

Zusätzlich kann man auch noch verschiedene Wellenlängen in jeweils verschiedenen Bereichen des hochparallelisierten multikonfokalen Laser-Scanning-Mikroskops anregen und die jeweils in diesen Bereichen angeregte Emission detektieren.

Neben der linearen Fluoreszenzanregung sind bei den bisher beschriebenen Verfahrensvarianten auch Multiphotonenanregungen der Fluoreszenz möglich.

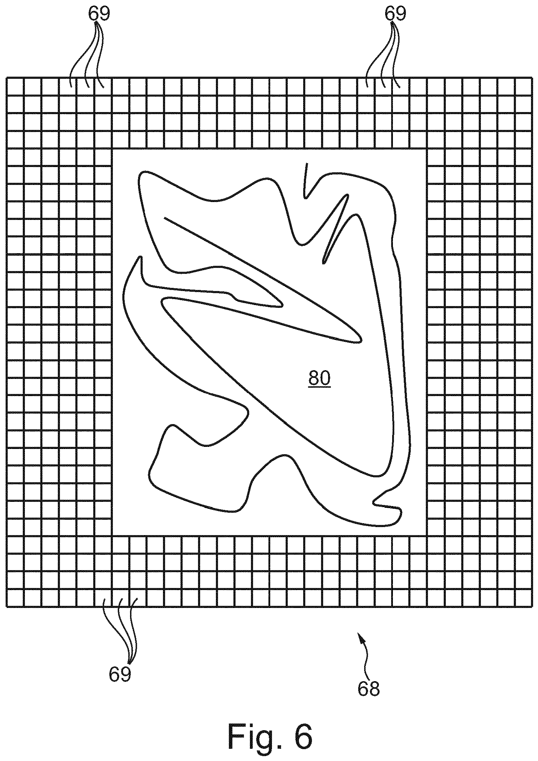

Schließlich kann die erfindungsgemäße Vorrichtung 100 auch zur direkten Bildgebung genutzt werden. Dies wird im Zusammenhang mit Fig. 6 erläutert. Dort ist die schematisch eine Abbildung eines Zellverbands 80 auf die Pixel 69 des ortsauflösenden Detektors 68 dargestellt. Dabei sind alle Sensorpixel 69 aktiv. Zur Erweiterung des Sehbereichs kann mit dem mechanischen Scanner des Mikroskops ein anderer Bereich der Probe dargestellt werden. Für die direkte Bildgebung müssen die Mikrolinsenanordnungen 16 vor und nach dem Pinhole in der Eingangsebene 10 aus dem Strahlengang herausgefahren werden (Doppelpfeil 17) und das Pinhole selbst muss auf die Größe des direkt abgebildeten Felds aufgezogen werden. Der variable Spiegel 22 wird dabei so eingestellt (Doppelpfeil 23), dass das Licht nicht über die spektrale Auswahlebene 48, sondern über den zweiten Strahlweg 2 auf den ortsauflösenden Detektor 68 geführt wird. Dabei wird eine inhärente Symmetrie der Anordnung ausgenutzt, welche darin liegt, dass die Position des variablen Spiegels 22 für das Licht, das aus der Manipulationseinrichtung 49 in der spektralen Auswahlebene 48 zurückkommt einerseits und für das Licht, das von der Pinholeebene 10 kommt, andererseits, äquivalent ist. Das Einführen des variablen Spiegels 22 in den Strahlengang in der Art, dass das Licht nicht über die spektrale Auswahlebene 48 geführt wird, sondern, von der Pinholeebene 10 kommend, direkt auf den ortsauflösenden Detektor 68 gelenkt wird, führt dazu, dass die Pinholeebene 10 auf den ortsauflösenden Detektor 68 abgebildet wird. Weil das Pinhole 10 aber selbst in einer konjugierten Ebene zur Probe steht, ist damit eine direkte Abbildung der Probe gegeben. Das ermöglicht nun, alle möglichen Weitfelddetektionsverfahren mit der erfindungsgemäßen Detektionseinrichtung elegant zu realisieren. Fig. 6 zeigt dabei eine einfache Abbildung der Intensitätsverteilung. In diesem Fall muss die Probe natürlich mit einem entsprechenden größeren Feld beleuchtet werden, was mit einer herkömmlichen Weitfeldbeleuchtung realisiert werden kann. Besser ist allerdings eine Beleuchtungsverteilung, die möglichst genau dem abgebildeten Feld entspricht und entsprechend über die Probe gescannt wird. Hierfür muss grundsätzlich nur ein entsprechendes Lichtfeld über den Hauptfarbteiler und den Scanner auf die Probe eingestrahlt und über diese gerastert oder gescannt werden.

Die Beleuchtung der Probe muss also an das jeweils zum Einsatz kommende Mikroskopieverfahren angepasst werden. So wird für den konfokalen Betriebsmodus der Laserstrahl in die Probe fokussiert und dieser Fokus über die Probe gerastert. Für die weitfeldartige Detektion muss eine entsprechende Anregung auf einem kleinen Feld in der Probe erfolgen. Das beleuchtete Feld sollte dabei der Größe der auf den Sensor abgebildeten Fläche entsprechen. Um ein größeres Bild zu scannen, muss das kleine Bildfeld mit dem mechanischen Scanner über die Probe bewegt werden. Hierfür muss die Optik des laserscannenden Systems so ausgelegt sein, dass sie ein gewisses Bildfeld transportieren/propagieren kann. Das bedeutet optisch, dass das System einen gewissen Lichtleitwert aufweisen muss.

Neben einer einfachen Abbildung der Intensität können auch weitere Verfahren, die beispielsweise auf einer strukturierten Beleuchtung basieren (SIM, Structured Illumination Microscopy) realisiert werden. Detektionsseitig funktioniert das genauso, wie soeben mit Bezug auf Fig. 6 beschrieben. Der Unterschied besteht nur in einer anderen Beleuchtung. Bei der direkten Bildgebung können neben der Darstellung der ortsaufgelösten Intensität auch weitere Parameter gemessen werden. Beispielsweise können mit SPAD-Array-Sensoren (SPAD = Single-Photon-Avalanche-Photodiode-Array) wegen der sehr hohen Auslesegeschwindigkeiten auch Fluoreszenzlebensdauern gemessen werden. Damit wird eine signifikante Erhöhung der Geschwindigkeit des als FLIM (Fluorescence lifetime imaging microscopy) bekannten Mikroskopieverfahrens erreicht. Weiterhin kann beispielsweise die Korrelation der molekularen Emissionen zur Erhöhung der optischen Auflösung genutzt werden. Dies wird zum Beispiel durch das sogenannte SOFI-Verfahren geleistet.

Die vorliegende Erfindung stellt also eine neuartige Optikgruppe bereit, die bei einer Vielzahl von mikroskopischen Verfahren zum Einsatz kommen kann. Im Gegensatz zu einem konfokalen Mikroskop nach dem Stand der Technik kann jetzt auch ein gewisses Bildfeld aufgenommen werden. Hierbei kann die Detektionsvorrichtung sowohl für eine Detektion nach dem Standardverfahren der konfokalen Mikroskopie unter Zuhilfenahme der vorteilhaften räumlichen Überabtastung als auch für eine weitfeldartige Detektion andererseits genutzt werden. Dadurch ist es möglich, konfokale Bilder mit mehreren spektralen Kanälen aufzunehmen. In einer weiteren Anwendung ist außerdem eine hochgradig parallelisierte Aufnahme eines Multipunktfelds zur besonders schonenden Mikroskopie von lebenden Proben möglich. Schließlich kann der zweidimensionale Charakter des Sensors voll ausgenutzt werden, indem ein kleines Weitfeldbild, welches über die Probe gescannt wird, aufgenommen wird. Dabei sind, im Zusammenspiel mit der Beleuchtung, unterschiedliche weitfeldartige Verfahren durchführbar.

Die vorliegende Erfindung schlägt also eine optische Anordnung vor, die ein einfaches Umschalten der Strahlwege dergestalt erlaubt, dass zwischen einer multikonfokalen Betriebsweise mittlerer Parallelisierung mit einstellbaren spektralen Signaturen und einer multikonfokalen Betriebsweise mit relativ hohem Parallelisierungsgrad auf nur einen Sensor umgeschaltet werden kann. Zudem ist durch Ausfahren, also Entfernen, von segmentierten Optiken (Multi- oder Mikrolinsenanordnungen) aus dem Detektionsstrahlengang auch eine Weitfelddetektion möglich. Im Detektionsstrahlengang werden zur Schaltung zwischen diesen beiden Modi nur maximal zwei Auswahlelemente, bevorzugt ein Spiegel in der Detektionseinheit und gegebenenfalls eine Multi- oder Mikrolinsenanordnung, nach der Pinholeebene geschaltet.

Für die Umschaltung der spektral aufgelösten multikonfokalen Mikroskopie mittlerer Parallelisierung zur hochparallelisierten Mikroskopie muss in einem einfachen Fall nur ein Spiegel geschaltet werden.

Die erfindungsgemäße Detektionsvorrichtung erlaubt also konfokale Multipunktabtastung mit oder ohne Photon Reassignment, hochparallele Multipunktabtastung und direkte Bildgebung.

### Bezugszeichenliste

- 1: erster Strahlweg
- 2: zweiter Strahlweg
- 5: Koordinatensystem
- 10: Ebene des der Lochblende (Pinholeebene), Eingangslochblende
- 12: erste Sammellinse
- 14: Detektionsstrahlenbündel nach erster Sammellinse
- 16: verstellbare Multilinsenanordnung
- 17: Doppelpfeil: Bewegung der verstellbaren Multilinsenanordnung
- 18: Detektionsstrahlenbündel nach Multilinsenarray
- 20: zweite Sammellinse
- 22: verstellbarer Spiegel
- 23: Doppelpfeil: Bewegung des verstellbaren Spiegels
- 24: Detektionsstrahlenbündel nach zweiter Sammellinse
- 26: Prisma
- 28: Detektionsstrahlenbündel nach Prisma
- 30: dritte Sammellinse
- 32: Detektionsstrahlenbündel nach dritter Sammellinse
- 34: erste Zerstreuungslinse
- 36: vierte Sammellinse
- 42, 44, 46: spektral aufgespaltene Teilstrahlen nach vierter Sammellinse
- 43, 45, 47: von Mikrospiegelarray 49 reflektierte Teilstrahlen 42, 44, 46
- 48: spektrale Auswahlebene
- 49: Mikrospiegelarray in spektraler Auswahlebene
- 50, 51, 52: Mikrospiegel des Mikrospiegelarrays 49
- 53: Pfeil: Durch die spektrale Auswahlebene hindurchtretendes Detektionslicht
- 54: von der spektralen Auswahlebene zurückgestrahltes Detektionslicht
- 56: Detektionslicht nach erneutem Durchtritt durch Prisma
- 57: Spiegel (fest einzustellen)
- 58: fünfte Sammellinse
- 59: Detektionslicht nach fünfter Sammellinse
- 60: zweite Zerstreuungslinse
- 62, 64: Detektionslicht nach zweiter Zerstreuungslinse
- 66: sechste Sammellinse
- 67: Detektionsebene
- 68: ortsauflösender Detektor
- 69: Pixel des ortsauflösenden Detektors
- 70: passiv gestellter Bereich des ortsauflösenden Detektors
- 71-78: spektral aufgespaltene Lichtflecken der Detektionsteilstrahlen
- 79: Lichtflecken im hochparallelisierten Konfokalbetrieb
- 80: Weitfeldbild
- 100: erfindungsgemäße Detektionsvorrichtung

## Patentansprüche

1. Optikgruppe für Detektionslicht eines Mikroskops, insbesondere eines konfokalen Scanning-Mikroskops,
mit einem Detektionsstrahlengang zum Führen von zu vermessendem Detektionslicht (11) von einer Eingangsebene (10) in eine zur Eingangsebene (10) optisch konjugierte Detektionsebene (67),
wobei der Detektionsstrahlengang mindestens einen ersten Strahlweg (1) aufweist mit ersten optischen Strahlführungsmitteln, insbesondere ersten Linsen und/oder Spiegeln (20, 30, 34, 36, 58, 60, 66), zum Abbilden der Eingangsebene (10) in die Detektionsebene (67),
wobei in dem ersten Strahlweg (1) mindestens eine dispersive Einrichtung (26) zum räumlichen spektralen Aufspalten des zu vermessenden Detektionslichts (24) vorhanden ist und
wobei in dem ersten Strahlweg (1) in einer zur Eingangsebene (10) und zur Detektionsebene (67) optisch konjugierten spektralen Auswahlebene (48) eine Manipulationseinrichtung (49) mit verstellbaren Strahlumlenkmitteln (50, 51, 52) zum Selektieren von mindestens einer spektralen Komponente des spektral räumlich aufgespaltenen Detektionslichts (42, 44, 46) vorhanden ist,
**dadurch gekennzeichnet,**
**dass** in der Detektionsebene (67) ein zweidimensional ortsauflösender segmentierter Detektor (68) zum Vermessen des Detektionslichts (11) angeordnet ist, dass von der Manipulationseinrichtung (49) selektiertes Detektionslicht (54) in unterschiedlich einstellbaren Winkeln dergestalt zurückstrahlbar ist, dass selektiertes Detektionslicht (54) die dispersive Einrichtung (26) in umgekehrter Richtung erneut durchläuft, und
**dass** die ersten optischen Strahlführungsmittel (20, 30, 34, 36, 58, 60, 66) zusammen mit der dispersiven Einrichtung (26) und der Manipulationseinrichtung (49) angeordnet und eingerichtet sind zum Erzeugen einer spektral räumlich aufgetrennten, spektral selektierten und beugungsbegrenzten Abbildung der Eingangsebene (10) in die Detektionsebene (67).

2. Optikgruppe nach Anspruch 1,
**dadurch gekennzeichnet,**
**dass** der Detektionsstrahlengang einen zweiten Strahlweg (2) aufweist mit zweiten optischen Strahlführungsmitteln, insbesondere Linsen und/oder Spiegeln (56, 66), zum Leiten des Detektionslichts (11) in die Detektionsebene (67),
**dass** die zweiten optischen Strahlführungsmittel (20, 22, 58, 60, 66) angeordnet und eingerichtet sind zum Erzeugen einer beugungsbegrenzten Abbildung der Eingangsebene (10) in die Detektionsebene (67) und
**dass** eine Auswahleinrichtung (22), insbesondere ein verstellbarer Spiegel (23), der bevorzugt in den Detektionsstrahlengang hineinbewegbar und aus diesem herausbewegbar ist, vorhanden ist zum Auswählen des ersten Strahlwegs (1) oder des zweiten Strahlwegs (2) für das zu vermessende Detektionslicht.

3. Optikgruppe nach Anspruch 1 oder 2,
**dadurch gekennzeichnet,**
**dass** in der Eingangsebene (10) eine Eingangslochblende, insbesondere ein konfokales Pinhole, zum Einlassen von zu vermessendem Detektionslicht (11) angeordnet ist.

4. Optikgruppe nach Anspruch 2 oder 3,
**dadurch gekennzeichnet,dass** der verstellbare Spiegel (22) in einen kollimierten Teil des Detektionsstrahlengangs hineinbewegbar ist.

5. Optikgruppe nach einem der Ansprüche 1 bis 4,
**dadurch gekennzeichnet,**
**dass** die Manipulationseinrichtung (49), insbesondere die Strahlumlenkmittel (50, 51, 52) in der spektralen Auswahlebene (48), durch ein Mikrospiegelarray, einen SLM (Spatial Light Modulator), ein DMD (DMD = Digital Mirror Device) und/oder ein MEMS (MEMS = Micro Electro-Mechanical Systems) gebildet ist beziehungsweise sind.

6. Optikgruppe nach einem der Ansprüche 1 bis 5,
**dadurch gekennzeichnet,**
**dass** strahlabwärts von der spektralen Auswahlebene (48) mindestens ein zweiter, insbesondere ortsauflösender, Detektor angeordnet ist zum Nachweis von Detektionslicht, das durch die spektrale Auswahlebene (48) hindurchtritt.

7. Optikgruppe nach einem der Ansprüche 1 bis 6,
**dadurch gekennzeichnet,**
**dass** die dispersive Einrichtung (26) ein Prisma ist.

8. Optikgruppe nach einem der Ansprüche 1 bis 7,
**dadurch gekennzeichnet,**
**dass** der erste ortsauflösende Detektor (68) und/oder der zweite ortauflösende Detektor
• ein, insbesondere kühlbarer, SPAD-Detektor (SPAD = Single-Photon-Avalanche-Photodiode-Array) ist,
• durch eine Mehrzahl von Photomultipliern gebildet ist, denen das Detektionslicht insbesondere über ein Bündel von optischen Fasern zugeführt wird,
• ein Halbleiter-Detektor, insbesondere ein CCD- oder ein CMOS-Detektor, ist und/oder
• eine Kamera mit einem vorgeschalteten Bildverstärker, insbesondere einem vorgeschalteten Multichannelplate, ist.

9. Optikgruppe nach einem der Ansprüche 1 bis 8,
**dadurch gekennzeichnet,**
**dass** mindestens eine, insbesondere zweidimensionale, Multilinsenanordnung (16) vorhanden ist und
**dass** eine Verstelleinrichtung (17) vorhanden ist, um die Multilinsenanordnung (16) in den Detektionsstrahlengang hinein und aus diesem heraus zu bewegen.

10. Verfahren zur Mikroskopie unter Verwendung der Optikgruppe nach einem der Ansprüche 1 bis 9, bei dem folgende Schritte durchgeführt werden:
Bestrahlen einer Probe in einem Mikroskop, insbesondere einem konfokalen Laser-Scanning-Mikroskop, mit Beleuchtungslicht in einem Beleuchtungsstrahlengang,
Sammeln von zu vermessendem Detektionslicht (11), insbesondere Fluoreszenzlicht, welches die Probe infolge des Bestrahlens mit dem Beleuchtungslicht abstrahlt,
Leiten des zu vermessenden Detektionslichts (11) durch die Eingangsebene (10) der Optikgruppe (100) und
Vermessen des Detektionslichts (11) mit dem in der Detektionsebene (67) der Optikgruppe (100) angeordneten Detektor (68).

11. Verfahren nach Anspruch 10,
**dadurch gekennzeichnet,**
**dass** zur spektral aufgelösten Multipunktrastermikroskopie die Probe mit mehreren Spots des Beleuchtungslichts, insbesondere mit in einer Linie liegenden Spots, gleichzeitig abgerastert wird,
wobei im Detektionsstrahlengang strahlabwärts von der Eingangsebene (10) eine Multilinsenanordnung (16) positioniert ist und die Anzahl der Linsen dieser Multilinsenanordnung (16) mindestens so groß ist wie die Anzahl der Spots des Beleuchtungslichts mit denen die Probe abgerastert wird,
**dass** mit der Auswahleinrichtung (22) der erste Strahlweg (1) für das zu vermessende Detektionslicht (11) ausgewählt wird,
**dass** die auf die einzelnen Spots des Beleuchtungslichts zurückgehenden Bündel des Detektionslichts spektral räumlich aufgespalten werden und die so erhaltenen Strahlenbündel (42, 44, 46) mit der Manipulationseinrichtung (49) manipuliert werden und
**dass** die manipulierten Strahlenbündel detektiert werden.

12. Verfahren nach Anspruch 11,
**dadurch gekennzeichnet,**
**dass** das Manipulieren der auf die einzelnen Spots des Beleuchtungslichts zurückgehenden Strahlenbündel für mindestens einen, insbesondere für alle, der Spots ein Auswählen mindestens einer, insbesondere einer einzigen, spektralen Komponente ist.

13. Verfahren nach Anspruch 10,
soweit eine Optikgruppe nach Anspruch 2 verwendet wird,
**dadurch gekennzeichnet,**
**dass** zur direkten Bildgebung (Weitfeldmikroskopie) die Probe mindestens in einem Sichtfeldbereich gleichzeitig mit Beleuchtungslicht bestrahlt wird,
**dass** mit der Auswahleinrichtung (22) der zweite Strahlweg (2) für das zu vermessende Detektionslicht (11) ausgewählt wird, wobei der Sichtfeldbereich auf den ortsauflösenden Detektor (68) abgebildet wird, und wobei der Detektionsstrahlengang frei ist von Multilinsenanordnungen (16).

14. Verfahren nach Anspruch 13,
**dadurch gekennzeichnet,**
**dass** der Sichtfeldbereich über die Probe gerastert wird.

15. Verfahren nach Anspruch 10,
soweit eine Optikgruppe nach Anspruch 2 verwendet wird,
**dadurch gekennzeichnet,**
**dass** zur hochparallelisierten Multipunktrastermikroskopie die Probe mit vielen Spots des Beleuchtungslichts, die insbesondere in einem zweidimensionalen Muster angeordnet sind, gleichzeitig abgerastert wird,
wobei im Detektionsstrahlengang strahlabwärts von der Eingangsebene (10) eine, insbesondere zweidimensionale, Multilinsenanordnung (16) positioniert ist und die Anzahl der Linsen dieser Multilinsenanordnung (16) mindestens so groß ist wie die Anzahl der Spots des Beleuchtungslichts mit denen die Probe abgerastert wird,
**dass** mit der Auswahleinrichtung (22) der zweite Strahlweg (2) für das zu vermessende Detektionslicht (11) ausgewählt wird,
**dass** die auf die einzelnen Spots des Beleuchtungslichts zurückgehenden Bündel des Detektionslichts (79) detektiert werden.

16. Verfahren nach Anspruch 15,
**dadurch gekennzeichnet,**
**dass** zur Beleuchtung in einer Pupillenebene des Beleuchtungsstrahlengangs ein beugendes Element, insbesondere ein SLM (Spatial Light Modulator) oder Damann-Gitter, positioniert ist.

17. Verfahren nach einem der Anspruch 10 bis 16,
**dadurch gekennzeichnet,**
**dass** als erster ortsauflösender Detektor (68) ein, insbesondere gekühlter, SPAD-detektor (SPAD = Single-Photon-Avalanche-Photodiode-Array) verwendet wird, wobei insbesondere bei dem SPAD-Array (68) nur diejenigen Pixel betrieben werden, die für die jeweils nötige Signalgenerierung genutzt werden.

18. Mikroskop, insbesondere konfokales Scanning-Mikroskop, mit einem Beleuchtungsstrahlengang mit mindestens einem Mikroobjektiv und einer Optikgruppe nach einem der Ansprüche 1 bis 9.

## Claims

1. Optical group for detection light of a microscope, in particular of a confocal scanning microscope,
having a detection beam path for guiding detection light (11) to be measured from an input plane (10) into a detection plane (67) which is optically conjugate to the input plane (10),
wherein the detection beam path comprises at least one first beam course (1) having first optical beam guiding means, in particular first lenses and/or mirrors (20, 30, 34, 36, 58, 60, 66), for imaging the input plane (10) into the detection plane (67),
wherein at least one dispersive device (26) for spatially spectrally splitting the detection light (24) to be measured is present in the first beam course (1), and
wherein a manipulation device (49) having adjustable beam deflection means (50, 51, 52) for selecting at least one spectral component of the spectrally spatially split detection light (42, 44, 46) is present in the first beam course (1) in a spectral selection plane (48) which is optically conjugate to the input plane (10) and the detection plane (67),
**characterized**
**in that** a two-dimensionally spatially resolving segmented detector (68) for measuring the detection light (11) is arranged in the detection plane (67),
**in that** detection light (54) selected by the manipulation device (49) can be radiated back in different adjustable angles in such a way that selected detection light (54) travels back in reverse through the dispersive device (26), and
**in that** the first optical beam guiding means (20, 30, 34, 36, 58, 60, 66) together with the dispersive device (26) and the manipulation device (49) are arranged and configured for generating a spectrally spatially separated, spectrally selected and diffraction-limited imaging of the input plane (10) into the detection plane (67).

2. Optical group according to claim 1,
**characterized**
**in that** the detection beam path comprises a second beam course (2) having second optical beam guiding means, in particular lenses and/or mirrors (56, 66), for guiding the detection light (11) into the detection plane (67),
**in that** the second optical beam guiding means (20, 22, 58, 60, 66) are arranged and configured for generating a diffraction-limited imaging of the input plane (10) into the detection plane (67), and
**in that** a selection device (22), in particular an adjustable mirror (23), which preferably is movable into the detection beam path and movable out of the latter, is present for selecting the first beam course (1) or the second beam course (2) for the detection light to be measured.

3. Optical group according to claim 1 or 2,
**characterized**
**in that** an input pinhole stop, in particular a confocal pinhole, for admitting detection light (11) to be measured is arranged in the input plane (10).

4. Optical group according to claim 2 or 3,
**characterized**
**in that** the adjustable mirror (22) is movable into a collimated part of the detection beam path.

5. Optical group according to any of claims 1 to 4,
**characterized**
**in that** the manipulation device (49), in particular the beam deflection means (50, 51, 52) in the spectral selection plane (48), is/are formed by a micromirror array, an SLM (Spatial Light Modulator), a DMD (DMD = Digital Mirror Device) and/or a MEMS (MEMS = Micro Electro-Mechanical Systems).

6. Optical group according to any of claims 1 to 5,
**characterized**
**in that** at least one second, in particular spatially resolving detector is arranged downstream of the spectral selection plane (48), for detecting detection light which passes through the spectral selection plane (48).

7. Optical group according to any of claims 1 to 6,
**characterized**
**in that** the dispersive device (26) is a prism.

8. Optical group according to any of claims 1 to 7,
**characterized**
**in that** the first spatially resolving detector (68) and/or the second spatially resolving detector
• is an, in particular coolable, SPAD detector (SPAD = Single Photon Avalanche Photodiode Array),
• is formed by a plurality of photomultipliers, to which the detection light is fed in particular via a bundle of optical fibers,
• is a semiconductor detector, in particular a CCD detector or a CMOS detector, and/or
• is a camera with an upstream image intensifier, in particular an upstream multichannel plate.

9. Optical group according to any of claims 1 to 8,
**characterized**
**in that** at least one, in particular two-dimensional, multilens array (16) is present, and
**in that** an adjusting device (17) is present in order to move the multilens array (16) into the detection beam path and out of the latter.

10. Method for microscopy using the optical group according to any of claims 1 to 9, wherein the following steps are carried out:
irradiating a sample in a microscope, in particular a confocal laser scanning microscope, with illumination light in an illumination beam path,
collecting detection light (11) to be measured, in particular fluorescent light, which the sample emits on account of being irradiated with the illumination light,
guiding the detection light (11) to be measured through the input plane (10) to the optical group (100), and
measuring the detection light (11) by means of the detector (68) arranged in the detection plane (67) of the optical group (100) .

11. Method according to claim 10,
**characterized**
**in that**, for spectrally resolved multipoint scanning microscopy,
the sample is scanned simultaneously with a plurality of spots of the illumination light, in particular with spots lying in a line,
wherein a multilens array (16) is positioned in the detection beam path downstream of the input plane (10) and the number of lenses of said multilens array (16) is at least equal to the number of spots of the illumination light with which the sample is scanned,
**in that** the selection device (22) selects the first beam course (1) for the detection light (11) to be measured,
**in that** the beams of the detection light that are attributed to the individual spots of the illumination light are spectrally spatially split and the beams (42, 44, 46) thus obtained are manipulated by the manipulation device (49), and
**in that** the manipulated beams are detected.

12. Method according to claim 11,
**characterized**
**in that** manipulating the beams attributed to the individual spots of the illumination light, for at least one, in particular for all, of the spots, is selecting at least one, in particular a single, spectral component.

13. Method according to claim 10,
insofar as an optical group according to claim 2 is used,
**characterized**
**in that**, for direct imaging (wide-field microscopy), the sample is irradiated simultaneously with illumination light at least in a field of view region,
**in that** the selection device (22) selects the second beam course (2) for the detection light (11) to be measured, wherein the field of view region is imaged onto the spatially resolving detector (68), and wherein the detection beam path is free of multilens arrays (16).

14. Method according to claim 13,
**characterized**
**in that** the field of view region is scanned over the sample.

15. Method according to claim 10,
insofar as an optical group according to claim 2 is used,
**characterized**
**in that**, for highly parallelized multipoint scanning microscopy, the sample is scanned simultaneously with many spots of the illumination light, which are arranged in particular in a two-dimensional pattern,
wherein an, in particular two-dimensional, multilens array (16) is positioned in the detection beam path downstream of the input plane (10) and the number of lenses of said multilens array (16) is at least equal to the number of spots of the illumination light with which the sample is scanned,
**in that** the selection device (22) selects the second beam course (2) for the detection light (11) to be measured,
**in that** the beams of the detection light (79) that are attributed to the individual spots of the illumination light are detected.

16. Method according to claim 15,
**characterized**
**in that** a diffractive element, in particular an SLM (Spatial Light Modulator) or a Dammann grating, is positioned for illumination in a pupil plane of the illumination beam path.

17. Method according to any of claims 10 to 16,
**characterized**
**in that** an, in particular cooled, SPAD detector (SPAD = Single Photon Avalanche Photodiode Array) is used as the first spatially resolving detector (68),
wherein in particular in the case of the SPAD array (68) only those pixels which are used for the signal generation respectively required are operated.

18. Microscope, in particular a confocal scanning microscope,
having an illumination beam path having at least one micro-objective and an optical group according to any of claims 1 to 9.

## Revendications

1. Groupe optique pour une lumière de détection d'un microscope, en particulier d'un microscope confocal à balayage,
avec un trajet optique de détection pour guider la lumière de détection (11) à mesurer à partir d'un plan d'entrée (10) dans un plan de détection (67) conjugué optiquement au plan d'entrée (10),
dans lequel le trajet optique de détection présente au moins un premier chemin de rayon (1) avec des premiers moyens de guidage de rayon optique, en particulier des premières lentilles et/ou miroirs (20, 30, 34, 36, 58, 60, 66), pour la représentation du plan d'entrée (10) dans le plan de détection (67),
dans lequel au moins un système dispersif (26) pour la décomposition spectrale spatiale de la lumière de détection (24) à mesurer est présent dans le premier chemin de rayon (1) et
dans lequel un système de manipulation (49) avec des moyens de déviation de rayon (50, 51, 52) réglables pour la sélection d'au moins une composante spectrale de la lumière de détection (42, 44, 46) décomposée spatialement de manière spectrale est présent dans le premier chemin de rayon (1) dans un plan de sélection spectral (48) conjugué optiquement au plan d'entrée (10) et au plan de détection (67),
**caractérisé en ce**
**qu'**un détecteur (68) segmenté à résolution spatiale bidimensionnelle pour mesurer la lumière de détection (11) est disposé dans le plan de détection (67),
**que** la lumière de détection (54) sélectionnée par le système de manipulation (49) peut être renvoyée dans des angles différemment réglables, de telle sorte que la lumière de détection (54) sélectionnée parcourt à nouveau le système dispersif (26) dans la direction inverse, et
**que** les premiers moyens de guidage de rayon optique (20, 30, 34, 36, 58, 60, 66) sont disposés conjointement avec le système dispersif (26) et le système de manipulation (49) et conçus pour générer une image séparée spatialement de manière spectrale, sélectionnée de manière spectrale et limitée par diffraction du plan d'entrée (10) dans le plan de détection (67) .

2. Groupe optique selon la revendication 1,
**caractérisé en ce**
**que** le trajet optique de détection présente un deuxième chemin de rayon (2) avec des deuxièmes moyens de guidage de rayon optique, en particulier des lentilles et/ou miroirs (56, 66), pour acheminer la lumière de détection (11) dans le plan de détection (67),
**que** les deuxièmes moyens de guidage de rayon optique (20, 22, 58, 60, 66) sont disposés et conçus pour générer une image limitée par diffraction du plan d'entrée (10) dans le plan de détection (67) et
**qu'**un système de sélection (22), en particulier un miroir réglable (23), qui peut être déplacé de préférence à l'intérieur du trajet optique de détection et à l'extérieur de celui-ci, est présent pour sélectionner le premier chemin de rayon (1) ou le deuxième chemin de rayon (2) pour la lumière de détection à mesurer.

3. Groupe optique selon la revendication 1 ou 2,
**caractérisé en ce**
**qu'**un sténopé d'entrée, en particulier un pinhole confocal, pour laisser entrer la lumière de détection (11) à mesurer, est disposé dans le plan d'entrée (10).

4. Groupe optique selon la revendication 2 ou 3,
**caractérisé en ce que** le miroir réglable (22) peut être déplacé à l'intérieur d'une partie collimatée du trajet optique de détection.

5. Groupe optique selon l'une quelconque des revendications 1 à 4,
**caractérisé en ce**
**que** le système de manipulation (49), en particulier les moyens de déviation de rayon (50, 51, 52) dans le plan de sélection spectral (48), est ou sont formés par une matrice de micro-miroirs, un SLM (Spatial Light Modulator, modulateur spatial de lumière), une matrice de micro-miroirs DMD (DMD = Digital Mirror Device) et/ou un MEMS (MEMS = système micro-électromécanique).

6. Groupe optique selon l'une quelconque des revendications 1 à 5,
**caractérisé en ce**
**qu'**au moins un deuxième détecteur, en particulier à résolution spatiale, est disposé en aval de rayon du plan de sélection spectral (48) pour la mise en évidence de la lumière de détection qui passe à travers le plan de sélection spectral (48) .

7. Groupe optique selon l'une quelconque des revendications 1 à 6,
**caractérisé en ce**
**que** le système dispersif (26) est un prisme.

8. Groupe optique selon l'une quelconque des revendications 1 à 7,
**caractérisé en ce**
**que** le premier détecteur à résolution spatiale (68) et/ou le deuxième détecteur à résolution spatiale
• est un détecteur SPAD (SPAD = ensemble de photodiode à avalanche à photon unique), en particulier pouvant être refroidi,
• est formé par une pluralité de photomultiplicateurs, auxquels la lumière de détection est amenée en particulier par l'intermédiaire d'un faisceau de fibres optiques,
• un détecteur à semi-conducteur, en particulier un détecteur CCD ou un détecteur CMOS et/ou
• une caméra avec un amplificateur d'image monté en amont, en particulier une galette de canaux multiples montée en amont.

9. Groupe optique selon l'une quelconque des revendications 1 à 8,
**caractérisé en ce**
**qu'**au moins un ensemble de lentilles multiples (16), en particulier bidimensionnel, est présent et
**qu'**un système de réglage (17) est présent, afin de déplacer l'ensemble de lentilles multiples (16) à l'intérieur du trajet optique de détection et à l'extérieur de celui-ci.

10. Procédé pour la microscopie au moyen du groupe optique selon l'une quelconque des revendications 1 à 9, selon lequel les étapes suivantes sont mises en oeuvre :
l'exposition d'un échantillon dans un microscope, en particulier un microscope confocal à balayage laser, à une lumière d'éclairage dans un trajet optique d'éclairage,
la focalisation de la lumière de détection (11) à mesurer, en particulier lumière fluorescente, laquelle irradie l'échantillon à la suite de l'exposition à la lumière d'éclairage,
l'acheminement de la lumière de détection (11) à mesurer à travers le plan d'entrée (10) du groupe optique (100) et
la mesure de la lumière de détection (11) avec le détecteur (68) disposé dans le plan de détection (67) du groupe optique (100) .

11. Procédé selon la revendication 10,
**caractérisé en ce**
**que** pour la microscopie à balayage à points multiples à résolution spatiale
l'échantillon est balayé simultanément avec plusieurs spots de la lumière d'éclairage, en particulier avec des spots situés de manière alignée,
dans lequel un ensemble de lentilles multiples (16) est positionné dans le trajet optique de détection en aval de rayon du plan d'entrée (10) et le nombre de lentilles de cet ensemble de lentilles multiples (16) est au moins aussi grand que le nombre de spots de la lumière d'éclairage avec lesquels l'échantillon est balayé,
**que** le premier chemin de rayon (1) pour la lumière de détection (11) à mesurer est sélectionné avec le système de sélection (22),
**que** les faisceaux de la lumière de détection attribués aux spots individuels de la lumière d'éclairage sont décomposés spatialement de manière spectrale et les faisceaux (42, 44, 46) ainsi obtenus sont manipulés avec le système de manipulation (49) et
**que** les faisceaux manipulés sont détectés.

12. Procédé selon la revendication 11,
**caractérisé en ce**
**que** la manipulation des faisceaux attribués aux spots individuels de la lumière d'éclairage pour au moins un, en particulier pour l'ensemble des spots est une sélection d'au moins une, en particulier une seule, composante spectrale.

13. Procédé selon la revendication 10,
dans la mesure où un groupe optique selon la revendication 2 est utilisé,
**caractérisé en ce**
**que** pour l'imagerie directe (microscopie en champ large) l'échantillon est exposé au moins dans une zone de champ de vision simultanément à la lumière d'éclairage,
**que** le deuxième chemin de rayon (2) pour la lumière de détection (11) à mesurer est sélectionné avec le système de sélection (22), dans lequel la zone de champ de vision est représentée sur le détecteur à résolution spatiale (68), et dans lequel le trajet optique de détection est exempt d'ensembles de lentilles multiples (16).

14. Procédé selon la revendication 13,
**caractérisé en ce**
**que** la zone de champ de vision est balayée sur l'échantillon.

15. Procédé selon la revendication 10,
dans la mesure où un groupe optique selon la revendication 2 est utilisé,
**caractérisé en ce**
**que** pour la microscopie à balayage à points multiples hautement parallélisé l'échantillon est balayé simultanément avec de nombreux spots de la lumière d'éclairage, qui sont disposés en particulier dans un motif bidimensionnel,
dans lequel un ensemble de lentilles multiples (16), en particulier bidimensionnel, est positionné dans le trajet optique de détection en aval de rayon du plan d'entrée (10)
et le nombre de lentilles de cet ensemble de lentilles multiples (16) est au moins aussi grand que le nombre de spots de la lumière d'éclairage avec lesquels l'échantillon est balayé,
**que** le deuxième chemin de rayon (2) pour la lumière de détection (11) à mesurer est sélectionné avec le système de sélection (22),
**que** les faisceaux de la lumière de détection (79) attribués aux spots individuels de la lumière d'éclairage sont détectés.

16. Procédé selon la revendication 15,
**caractérisé en ce**
**que** pour l'éclairage un élément de diffraction, en particulier un SLM (Spatial Light Modulator) ou réseau de Damman, est positionné dans un plan de pupille du trajet optique d'éclairage.

17. Procédé selon l'une quelconque des revendications 10 à 16,
**caractérisé en ce**
**qu'**un détecteur SPAD (SPAD = ensemble de photodiode à avalanche à photon unique), en particulier refroidi, est utilisé en tant que premier détecteur à résolution spatiale (68), dans lequel en particulier pour l'ensemble SPAD (68) seuls les pixels qui sont utilisés pour la génération de signal respectivement nécessaire fonctionnent.

18. Microscope, en particulier microscope à balayage confocal,
avec un trajet optique d'éclairage avec au moins un micro-objectif et un groupe optique selon l'une quelconque des revendications 1 à 9.
